(19) Europäisches Patentamt
European Patent Office
Office européen des brevets

(11) **EP 4 496 409 B1**

(12) **EUROPEAN PATENT SPECIFICATION**

(45) Date of publication and mention
of the grant of the patent:
**18.02.2026 Bulletin 2026/08**

(21) Application number: **23769834.5**

(22) Date of filing: **15.03.2023**

(51) International Patent Classification (IPC):
*H04W 72/0446* (2023.01)  *G01S 7/00* (2006.01)
*H04W 28/02* (2009.01)  *G01S 13/00* (2006.01)

(52) Cooperative Patent Classification (CPC):
**H04W 72/0446; G01S 7/006; H04W 28/0236;
H04W 28/0268;** G01S 13/003

(86) International application number:
**PCT/CN2023/081633**

(87) International publication number:
**WO 2023/174332 (21.09.2023 Gazette 2023/38)**

(54) **SENSING PROCESSING METHOD AND DEVICE**

ERFASSUNGSVERARBEITUNGSVERFAHREN UND -VORRICHTUNG

PROCÉDÉ ET APPAREIL DE TRAITEMENT DE DÉTECTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.03.2022 CN 202210273470**

(43) Date of publication of application:
**22.01.2025 Bulletin 2025/04**

(73) Proprietor: **VIVO MOBILE COMMUNICATION CO.,
LTD.
Dongguan, Guangdong 523863 (CN)**

(72) Inventors:
• **DING, Shengli**
  **Dongguan, Guangdong 523863 (CN)**
• **JIANG, Dajie**
  **Dongguan, Guangdong 523863 (CN)**
• **LI, Jianzhi**
  **Dongguan, Guangdong 523863 (CN)**
• **YAO, Jian**
  **Dongguan, Guangdong 523863 (CN)**

(74) Representative: **Lavoix
Bayerstraße 83
80335 München (DE)**

(56) References cited:
WO-A1-2015/160158    CN-A- 104 994 046
CN-A- 105 898 873    CN-A- 106 549 722
US-A1- 2021 286 045

• XINYU LI ET AL: "Assisting Living by Wireless
Sensing: The Role of Integrated Sensing and
Communications in 6G Era", ARXIV.ORG,
CORNELL UNIVERSITY LIBRARY, 201 OLIN
LIBRARY CORNELL UNIVERSITY ITHACA, NY
14853, 19 February 2022 (2022-02-19),
XP091161544
• TANG WUCHEN ET AL: "On the bits per joule
optimization in cellular cognitive radio
networks", 2014 1ST INTERNATIONAL
WORKSHOP ON COGNITIVE CELLULAR
SYSTEMS (CCS), IEEE, 2 September 2014
(2014-09-02), pages 1 - 5, XP032667936, DOI:
10.1109/CCS.2014.6933811

## Description

### CROSS-REFERENCE TO RELATED APPLICATIONS

This application claims priority to Chinese Patent Application No. 202210273470.X filed in China on March 18, 2022**.**

### TECHNICAL FIELD

This application pertains to the field of communication technologies and specifically relates to a sensing processing method and device.

### BACKGROUND

With the development of communication technologies, integrated sensing and communication can be realized in communication systems. There are both communication and sensing services in integrated sensing and communication scenarios. Currently, in traditional sensing methods, fixed sensing frame configurations are usually used to perform sensing services. In integrated sensing and communication scenarios, due to the presence of communication and sensing services, and the continuous change in communication load or sensing scenarios, when fixed sensing frame configurations are used to perform sensing services, it is likely to lead to time resource redundancy or failure to meet sensing performance requirements.

Document US 2021/286045 AI discloses an example of the prior art.

### SUMMARY

The invention is set out in the appended set of claims.

Embodiments of this application provide a sensing processing method and apparatus, a communication device, and a readable storage medium, to optimize sensing time-resource occupation while sensing performance requirements are met.

According to a first aspect, a sensing processing method is provided, including:

obtaining, by a first device, a first indicator, where the first indicator includes echo signal quality within a first sensing frame or predicted echo signal quality within a second sensing frame, the second sensing frame is a sensing frame following the first sensing frame, and a sensing frame includes a first slot for performing signal transmission and reception; and
determining, by the first device, a duration of a first slot of the second sensing frame based on the first indicator.

According to a second aspect, a sensing processing method is provided, including:

in a case that a first device adjusts a duration of a first slot based on a first indicator, receiving, by a second device, first indication information from the first device, where the first indicator includes echo signal quality within a first sensing frame or predicted echo signal quality within a second sensing frame, the second sensing frame is a sensing frame following the first sensing frame, a sensing frame includes a first slot for performing signal transmission and reception, and the first indication information is used to indicate a duration of a first slot of the second sensing frame.

In a case that the first device is a sensing function network element, the second device includes at least one of a receiving device in a sensing node and a transmitting device in the sensing node; in a case that the first device is a receiving device in a sensing node, the second device includes at least one of a transmitting device in the sensing node and a sensing function network element; and in a case that the first device is a transmitting device in a sensing node, the second device includes at least one of a receiving device in the sensing node and a sensing function network element.

According to a third aspect, a sensing processing apparatus is provided, applied to a first device, and includes:

an obtaining module, configured to obtain a first indicator, where the first indicator includes echo signal quality within a first sensing frame or predicted echo signal quality within a second sensing frame, the second sensing frame is a sensing frame following the first sensing frame, and a sensing frame includes a first slot for performing signal transmission and reception; and
an adjustment module, configured to adjust a duration of a first slot of the second sensing frame based on the first indicator.

According to a fourth aspect, a sensing processing apparatus is provided, applied to a second device, and includes:

a first receiving module configured to: in a case that a first device adjusts a duration of a first slot based on a first indicator, receive first indication information from the first device, where the first indicator includes echo signal quality within a first sensing frame or predicted echo signal quality within a second sensing frame, the second sensing frame is a sensing frame following the first sensing frame, a sensing frame includes a first slot for performing signal transmission and reception, and the first indication information is used to indicate a duration of a first slot of the second sensing frame.

In a case that the first device is a sensing function network element, the second device includes at least one of a receiving device in a sensing node and a transmitting device in the sensing node; in a case that the first device is a receiving device in a sensing node, the second device includes at least one of a transmitting device in the sensing node and a sensing function network element; and in a case that the first device is a transmitting device in a sensing node, the second device includes at least one of a receiving device in the sensing node and a sensing function network element.

According to a fifth aspect, a communication device is provided. The communication device includes a processor and a memory, and the memory stores a program or an instruction capable of running on the processor. When the program or instruction is executed by the processor, the steps of the method according to the first aspect are implemented, or the steps of the method according to the second aspect are implemented.

According to a sixth aspect, a communication device is provided, including a processor and a communication interface. In a case that the communication device is a first device, the communication interface is configured to obtain a first indicator, where the first indicator includes echo signal quality within a first sensing frame or predicted echo signal quality within a second sensing frame, the second sensing frame is a sensing frame following the first sensing frame, and a sensing frame includes a first slot for performing signal transmission and reception; and the processor is configured to determine a duration of a first slot of the second sensing frame based on the first indicator.

Alternatively, in a case that the communication device is a second device, the communication interface is configured to: in a case that a first device adjusts a duration of a first slot based on a first indicator, receive first indication information from the first device, where the first indicator includes echo signal quality within a first sensing frame or predicted echo signal quality within a second sensing frame, the second sensing frame is a sensing frame following the first sensing frame, a sensing frame includes a first slot for performing signal transmission and reception, and the first indication information is used to indicate a duration of a first slot of the second sensing frame.

In a case that the first device is a sensing function network element, the second device includes at least one of a receiving device in a sensing node and a transmitting device in the sensing node; in a case that the first device is a receiving device in a sensing node, the second device includes at least one of a transmitting device in the sensing node and a sensing function network element; and in a case that the first device is a transmitting device in a sensing node, the second device includes at least one of a receiving device in the sensing node and a sensing function network element.

According to a seventh aspect, a communication system is provided, including a first device and a second device. The first device may be configured to execute the steps of the sensing processing method according to the first aspect, and the second device may be configured to execute the steps of the sensing processing method according to the second aspect.

According to an eighth aspect, a readable storage medium is provided, where a program or an instruction is stored in the readable storage medium, and when the program or instruction is executed by a processor, the steps of the method according to the first aspect are implemented, or the steps of the method according to the second aspect are implemented.

According to a ninth aspect, a chip is provided, where the chip includes a processor and a communication interface, the communication interface is coupled to the processor, and the processor is configured to run a program or an instruction to implement the steps of the method according to the first aspect or the steps of the method according to the second aspect.

According to a tenth aspect, a computer program/program product is provided. The computer program/program product is stored in a storage medium, and the computer program/program product is executed by at least one processor so as to implement the steps of the method according to the first aspect or the steps of the method according to the second aspect.

In this embodiment of this application, the first device obtains the first indicator, where the first indicator includes the echo signal quality within the first sensing frame or the predicted echo signal quality within the second sensing frame, the second sensing frame is a sensing frame following the first sensing frame, and a sensing frame includes a first slot for performing signal transmission and reception; and the first device determines the duration of the first slot of the second sensing frame based on the first indicator. In this way, the duration of the first slot can be flexibly adjusted based on the first indicator according to a change in a sensing environment, thereby optimizing sensing time-resource occupation while sensing performance requirements are met.

## BRIEF DESCRIPTION OF DRAWINGS

FIG. 1 is a structural diagram of a network system to which embodiments of this application are applied;
FIG. 2 is a schematic flowchart of a sensing processing method according to an embodiment of this application;
FIG. 3 is an example composition diagram of a sensing frame in a sensing processing method according to an embodiment of this application;
FIG. 4 is an example diagram of a sensing frame arrangement applied in a sensing processing method according to an embodiment of this application;
FIG. 5 is an example diagram of another sensing frame arrangement applied in a sensing processing method according to an embodiment of this application;
FIG. 6 is a schematic flowchart of another sensing processing method according to an embodiment of this application;
FIG. 7 is a structural diagram of a sensing processing apparatus according to an embodiment of this application;

FIG. 8 is a structural diagram of another sensing processing apparatus according to an embodiment of this application;

FIG. 9 is a structural diagram of a communication device according to an embodiment of this application;

FIG. 10 is a structural diagram of a terminal according to an embodiment of this application; and

FIG. 11 is a structural diagram of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

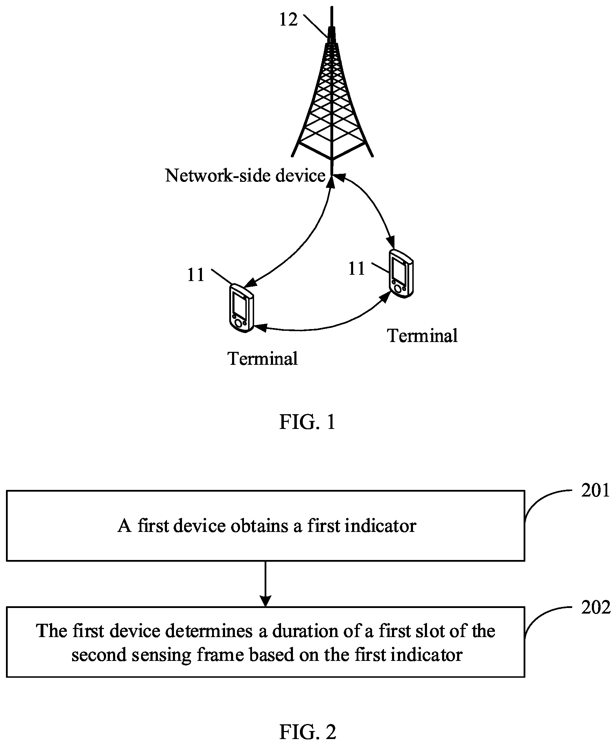

FIG. 1 is a block diagram of a wireless communication system to which the embodiments of this application are applied. The wireless communication system includes a terminal 11 and a network-side device 12. The terminal 11 may be a terminalside device, such as a mobile phone, a tablet personal computer (Tablet Personal Computer), a laptop computer (Laptop Computer,) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the terminal 11 is not limited to a specific type in the embodiments of this application. The network-side device 12 can include an access network device or core network device, where the access network device can also be referred to as a radio access network device, radio access network (Radio Access Network, RAN), radio access network function, or radio access network unit. The access network device 12 can include base stations, wireless local area network (Wireless Local Area Network, WLAN) access points, Wi-Fi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that only a core network device in an NR system is used as an example in the embodiments of this application and the core network device is not limited to a specific type.

For ease of understanding, the following describes some content included in the embodiments of this application:

### 1. Integrated sensing and communication

Integrated sensing and communication (ISAC) achieves low-cost integration of communication and sensing functions through hardware sharing and software-defined functions and features unified and simplified architecture, reconfigurable and scalable functions, and improved efficiency with reduced costs. Integrated sensing and communication has three main advantages: reduced device costs and size, improved spectrum utilization, and enhanced system performance.

The development of ISAC is divided into four stages: coexistence, co-operation, co-design, and co-collaboration.

Coexistence: Communication and sensing are two separate systems that interfere with each other. The main methods to resolve interference include distance isolation, band isolation, time division operation, multiple input multiple output (Multiple Input Multiple Output, MIMO) technology, precoding, and the like.

Co-operation: Communication and sensing share a hardware platform, utilizing shared information to enhance overall performance. The power distribution between the two significantly affects system performance.

Co-design: Communication and sensing form a fully united system, including joint signal design, waveform design, coding design, and the like. Initially, linear frequency modulation waveforms and spread spectrum waveforms are used, and later, attention focuses on orthogonal frequency division multiplexing (Orthogonal Frequency Division Multiplexing, OFDM) waveforms, MIMO technology, and the like.

Co-collaboration: Multiple integrated sensing and communication nodes collaborate to achieve a common goal. For example, radar detection information is shared through communication data transmission, with the typical scenarios being driving assistance systems, radar-assisted communication, and the like.

### 2. Radar technology

With the development of radar technology, radar detection not only measures the distance to a target but also measures the speed, azimuth angle, and elevation angle of the target, and extracts more target-related information, including the size, shape and the like of the target from the foregoing information.

Initially, radar technology is used for military purposes to detect aircraft, missiles, vehicles, ships, and other targets. With the development of technologies and social evolution, radar is increasingly applied in civilian scenarios. A typical application is weather radar, which measures echoes from meteorological targets like clouds and rain to determine locations, intensity, and other information of the clouds and rain, so as to perform weather forecasting. Furthermore, with the rapid development of the electronics information industry, internet of things, communication technology, and the like, radar technology has entered daily life of people, greatly enhancing convenience, safety, and the like in work and life. For example, automotive radar provides warning information for automotive driving by measuring the distance and relative speed between vehicles, a vehicle and surrounding environment, a vehicle and pedestrians, and the like, significantly improving road traffic safety.

Technically, radar can be classified in various ways. By location relationships between transmitters and receivers of radar, there are monostatic radar and bistatic radar, as shown in the figure below. For monostatic radar, a signal transmitter and a receiver are integrated and share an antenna. The advantage is that a target echo signal and a local oscillator of the receiver are naturally coherent and thus signal processing is convenient. The disadvantage is that signal transmission and reception cannot be performed at the same time, and signal waveforms with a certain duty cycle must be adopted. Consequently, a detection blind spot is caused and a complex algorithm needs to be used for compensation. Alternatively, signal transmission and reception are performed at the same time, and transmission and reception are strictly isolated, but this is difficult for high-power military radar. For bistatic radar, a signal transmitter and a receiver are located at different locations. The advantage is that a signal may be transmitted and received at the same time, and continuous-wave waveforms may be used for detection. The disadvantage is that it is difficult to achieve co-frequency and coherence between the receiver and the transmitter, leading to complex signal processing.

In integrated sensing and communication wireless sensing applications, radar technology can be used in either monostatic mode or bistatic radar mode.

In monostatic radar mode, a transmitted signal and a received signal share an antenna, and the transmitted signal and the received signal enter different radio frequency processing chains through a circulator. In this mode, continuous wave signal waveforms can be used for blind-spot-free detection, provided that the received signal and the transmitted signal are well isolated, typically requiring an isolation of about 100 dB to eliminate masking of the received signal caused by leakage of the transmitted signal. Since the receiver of monostatic radar has complete information on the transmitted signal, signal processing can be performed through matched filtering (pulse compression) to achieve high signal processing gain.

In bistatic radar mode, there is no isolation between transmitted and received signals, greatly simplifying hardware complexity. Since radar signal processing is based on known information, in NR integrated sensing and communication applications of 5th generation mobile communication technology (5th Generation Mobile Communication Technology, 5G), known information such as synchronization signals and reference signals can be used for radar signal processing. However, due to the periodicity of synchronization signals and reference signals, an ambiguity diagram of signal waveforms is no longer thumbtack-shaped but thumbtack-board-shaped, increasing the ambiguity in delay and Doppler, and the main lobe gain is significantly reduced as compared with the monostatic radar mode, reducing the measurement range of distance and speed. With proper parameter set design, the distance and speed measurement requirements for common targets like vehicles and pedestrians can be met. Additionally, the measurement accuracy of bistatic radar is related to the relative positions of the transmitter and receiver concerning the target, and appropriate transmitter and receiver locations need to be chosen to improve detection performance.

In integrated sensing and communication scenarios, there are both communication and sensing services. Besides using integrated sensing and communication waveforms to perform both communication and sensing services, sensing time-resource occupation services can be optimized, so that sensing time-resource occupation services are optimized while sensing performance is satisfied. Time resources not used for specific sensing services can be used for performing other sensing services or data communication. This leads to the sensing processing method of this application.

The following describes in detail the sensing processing method provided in the embodiments of this application by using some embodiments and application scenarios thereof with reference to the accompanying drawings.

Referring to FIG. 2, an embodiment of this application provides a sensing processing method. As shown in FIG. 2, the sensing processing method includes the following steps.

Step 201. A first device obtains a first indicator, where the first indicator includes echo signal quality within a first sensing frame or predicted echo signal quality within a second sensing frame, the second sensing frame is a sensing frame following the first sensing frame, and a sensing frame includes a first slot for performing signal transmission and reception.

Step 202. The first device determines a duration of a first slot of the second sensing frame based on the first indicator.

In this embodiment of this application, a sensing frame can also be referred to as a sensing frame period. A duration of a sensing frame or a sensing frame period can be understood as a time length required for a sensing node to perform one slow-time dimension signal processing on a first signal and obtain a first parameter of a sensing object, where the first parameter is used to represent at least one of location information and movement information of the sensing object. The one slow-time dimension signal processing on the first signal can be understood as signal processing on first signals of all sensing signal periods within one sensing frame period.

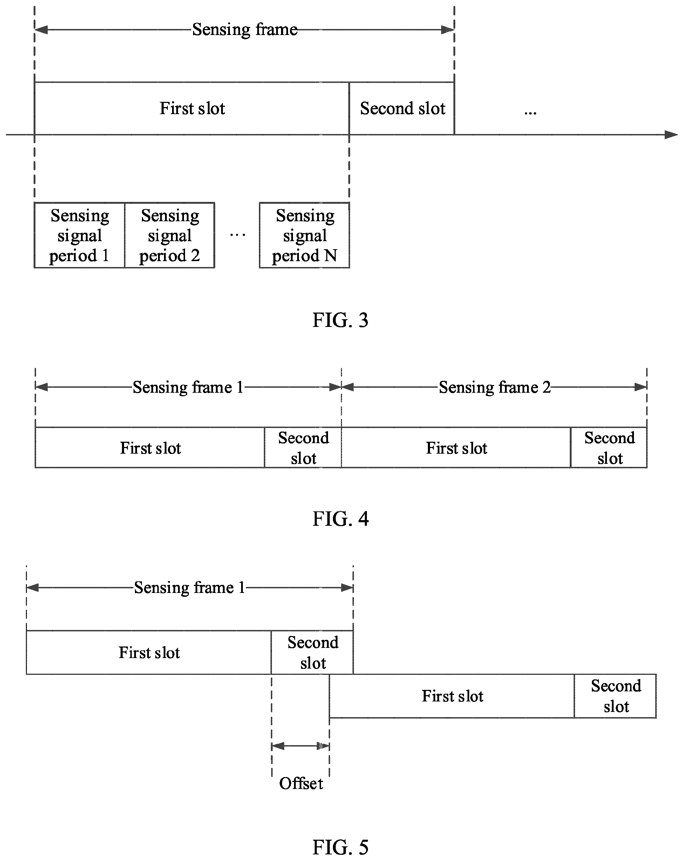

As shown in FIG. 3, a sensing frame includes a first slot and a second slot, where the first slot is used for performing signal transmission and reception operations, and the second slot is used for performing operations other than signal transmission and reception. The first slot can be referred to as a signal transmission and reception slot, and can include one or more sensing signal periods. A sensing signal period refers to a time length of a sensing signal corresponding to one sensing signal transmission and reception or fast-time dimension signal processing, where one fast-time dimension signal processing on the first signal can be understood as signal processing on the first signal within one signal period. The second slot can be referred to as a comprehensive processing slot. The second slot is used for operations such as partial sensing signal processing calculation (for example, slow-time dimension fast Fourier transform (Fast Fourier Transform, FFT)), data processing calculation, resource scheduling, and waveform generation for next sensing frame. The duration required for the comprehensive processing slot mainly depends on two factors. One is computing capability of device; and the other is service type of sensing service (for example, ranging/speed measurement/angle measurement, or radar imaging) and algorithm used (including signal processing algorithms, data processing algorithms, and the like).

Optionally, the sensing update period can be understood as a time interval between a time when the sensing node performs one slow-time dimension signal processing on the first signal in the M1-th sensing frame period and obtains the first parameter of the sensing object and a time when the sensing node performs one signal slow-time dimension signal processing in the M2-th sensing frame period and obtains the first parameter of the sensing object. M1 and M2 are both positive integers, and the difference between M2 and M1 is equal to the number of sensing frame periods included in the sensing update period. The first parameter is used to represent at least one of the location information and movement information of the sensing object.

Optionally, in one sensing signal period, signal transmission and reception in time domain includes continuous-wave waveforms and pulse waveforms, and signal transmission and reception in spatial domain includes monostatic radar and bistatic radar. In the monostatic radar, a signal transmitting device and a signal receiving device belong to a same device, and in the bistatic radar, a signal transmitting device and a receiving device belong to different devices.

For a given type of sensing service and algorithm (provided in a sensing requirement) and a given device capability, the time length of the comprehensive processing slot is determined. In integrated sensing and communication applications, the time length of the comprehensive processing slot can be obtained by looking up a table or mappings based on the type of sensing service, algorithm used, and device capability. The sensing requirements can be referred to as sensing requirement information, which specifically includes at least one of the following: sensing target region, sensing object type, and sensing quality of service (Quality of Service, QoS).

Optionally, in some embodiments, the first sensing frame can be a current sensing frame, and the echo signal quality can be understood as echo signal quality of the sensing object, that is, echo signal quality obtained by sensing the sensing object based on the first signal.

In this embodiment of this application, the first device determining the duration of the first slot of the second sensing frame based on the first indicator can be understood as adaptively adjusting the duration of the first slot based on the first indicator, for example, increasing or decreasing the duration of the first slot, or keeping the duration of the first slot unchanged. For example, in this embodiment of this application, if it is determined, based on the echo signal quality in the current sensing frame or the predicted echo signal quality in the second sensing frame, that the sensing performance can meet the requirement, time resources occupied by the sensing service can be appropriately reduced. If it is determined that the sensing performance cannot meet the requirement, the duration of the first slot can be increased, allowing more time resources for the sensing service and improving the sensing performance.

In this embodiment of this application, the first device obtains the first indicator, where the first indicator includes the echo signal quality within the first sensing frame or the predicted echo signal quality within the second sensing frame, the second sensing frame is a sensing frame following the first sensing frame, and a sensing frame includes a first slot for performing signal transmission and reception; and the first device determines the duration of the first slot of the second sensing frame based on the first indicator. In this way, the duration of the first slot can be flexibly adjusted based on the first indicator according to a change in a sensing environment, thereby optimizing sensing time-resource occupation while sensing performance requirements are met.

Optionally, in some embodiments, after the determining, by the first device, a duration of a first slot of the second sensing frame based on the first indicator, the method further includes at least one of the following:

in a case that the first device includes a transmitting device in the sensing node, transmitting, by the first device, the first signal based on the adjusted duration of the first slot; and
in a case that the first device includes a receiving device in the sensing node, receiving, by the first device, the first signal based on the adjusted duration of the first slot.

In this embodiment of this application, after determining the adjusted duration of the first slot, the first device can perform the sensing service by transmitting and/or receiving the first signal, thereby achieving adaptive adjustment to the duration of the first slot. It should be understood that in a case that the first device includes a receiving device in the sensing node, after receiving the first signal and obtaining echo data, the first device can further perform one of the following actions:

transmitting the echo data to a second device;
performing a first operation on the echo data to obtain an intermediate sensing result, and then transmitting the intermediate sensing result to the second device; and
performing a second operation on the echo data to obtain a target sensing result, and transmitting the target sensing result to the second device, where the second operation is a partial operation of the first operation.

Optionally, in some embodiments, before the obtaining, by a first device, a first indicator, the method further includes:

obtaining, by the first device, target information, where the target information includes at least one of first information and capability information of a sensing node, and the first information includes at least one of a sensing target region, a sensing object type, sensing QoS, sensing prior information, and location information of the sensing node; and
determining, by the first device, an initial configuration based on the target information, where the initial configuration includes at least one of the following: configuration information of a first slot, a duration of a second slot, and sensing frame arrangement, where the second slot is a slot in a sensing frame for performing an operation other than signal transmission and reception.

In this embodiment of this application, the duration of the first slot of the first sensing frame can be the initial duration, or a duration obtained by adjusting the initial duration for one or more times. Since at least one of the lower limit of the duration of the first slot and the upper limit of the duration of the first slot is determined based on the target information, the adjustment range of the duration of the first slot is limited according to an actual sensing requirement. Therefore, this can avoid excessive adjustment to the duration of the first slot.

In this embodiment of this application, the first device can be a sensing function network element or a sensing node. For different first devices, there are the following cases for the first device to obtain the first information.

Case 1. In a case that the first device is a sensing function network element, the first device obtains the first information or a first part of the first information from a sensing application server and/or a sensing service initiator. In a case that the first device obtains the first part of the first information, the first device generates a second part of the first information based on the first part of the first information obtained.

Case 2. In a case that the first device is a sensing node, the first device obtains the first information or a first part of the first information from a sensing function network element and/or a sensing application server and/or a sensing service initiator. In a case that the first device obtains the first part of the first information, the first device generates a second part of the first information based on the first part of the first information obtained.

The sensing target region refers to a location region where the sensing object may be present or a location region where imaging or three-dimensional reconstruction is required.

Optionally, the sensing object type can be determined based on at least one of the following: a typical movement speed of a sensing object, a typical movement acceleration of a sensing object, and a radar cross-section (Radar cross-section, RCS). That is, the sensing object type includes information such as the typical movement speed of a sensing object, the typical movement acceleration of a sensing object, and the typical RCS. The typical RCS can be understood as a reflective cross-section of the sensing object.

The sensing QoS can be understood as a performance indicator for sensing the sensing target region or sensing object, specifically including at least one of the following: a sensing resolution requirement, a sensing accuracy requirement, a sensing range requirement, a sensing delay requirement, a sensing update rate requirement, a detection probability requirement, and a false alarm probability requirement. The sensing resolution requirement can be further divided into a ranging resolution requirement, an angle measurement resolution requirement, a speed measurement resolution requirement, an imaging resolution requirement, and the like. The sensing accuracy requirement can be further divided into a ranging accuracy requirement, an angle measurement accuracy requirement, a speed measurement accuracy requirement, ad a positioning accuracy requirement, and the like. The sensing range requirement can be further divided into a ranging range requirement, a speed measurement range requirement, an angle measurement range requirement, an imaging range requirement, and the like. The sensing delay requirement can be understood as a requirement on a time interval from sensing signal transmission to sensing result obtaining, or a requirement on a time interval from sensing request initiation to sensing result obtaining. The sensing update rate requirement can be understood as a requirement on a time interval between two consecutive executions of sensing and sensing result obtaining. The detection probability requirement can be understood as a probability requirement on correctly detecting the presence of a sensing object in a case that the sensing object is present. The false alarm probability can be understood as a probability of incorrectly detecting the presence of a sensing object in a case that the sensing object is not present.

Optionally, the sensing prior information refers to information provided to the sensing node about a spatial range and/or movement attribute of the sensing object or sensing target region, which helps the sensing node narrow a search range. The sensing prior information specifically includes at least one of the following:

spatial range prior information, such as distance or location range and/or an angle range of an object or sensing target region to be sensed; and
movement attribute prior information, such as a speed range and/or acceleration range of an object to be sensed.

Optionally, the location information of the sensing node can include the following two cases:

for a sensing node with a fixed location, such as a base station or a TRP, location information of the sensing node is known, and the location information of the sensing node can be obtained through accessing a network function (for example, a network management system or unified data management) that stores the location information of the sensing node, or reporting by the sensing node; and
for a mobile sensing node, such as a terminal, before performing sensing measurement, a sensing function network element should first obtain location information of the sensing node. The method to obtain the location information can be making a request to a positioning management function or another service function to obtain the location information. The positioning management function may be a location management function (Location Management Function, LMF), or a network function that receives location information related to minimization of drive test (Minimization of Drive Test, MDT). The positioning service function may be an application function (Application Function, AF), and the AF may be a Wi-Fi, Bluetooth (Bluetooth), ultra wide band (Ultra Wide Band, UWB) or other positioning server, or may be an application function that can obtain positioning information from the global positioning system (Global Positioning System, GPS) and the like, for example, a map application (Application, APP).

Optionally, the configuration information of a first slot includes at least one of the following: an initial duration of the first slot, an upper limit of the duration of the first slot, and a lower limit of the duration of the first slot.

The initial duration of the first slot and a duration obtained after adjusting the duration of the first slot are both within a time interval defined by the upper limit of the duration of the first slot and the lower limit of the duration of the first slot.

Optionally, the determining, by the first device, an initial configuration based on the target information includes at least one of the following:

determining, by the first device, the lower limit of the duration of the first slot based on a Doppler resolution requirement, where the Doppler resolution requirement is included in the sensing QoS;

determining, by the first device, the upper limit of the duration of the first slot based on the sensing object type; and

determining, by the first device, the initial duration of the first slot based on at least one of the sensing object type and the sensing prior information.

Optionally, in some embodiments, the lower limit of the duration of the first slot is equal to a reciprocal of the Doppler resolution requirement. For example, it is assumed the Doppler resolution requirement is $\Delta f_0$, and the lower limit $T_{s,\min}$ of the duration of the first slot satisfies:

$$T_{s,\min} = \frac{1}{\Delta f_0}.$$

It should be noted that in a wireless sensing process, it is assumed that the first parameter of the sensing object remains unchanged within one signal transmission and reception slot. The premise of the above assumption is that the change in the first parameter of the sensing object within one signal transmission and reception slot needs to be less than a certain preset threshold. The first parameter can include at least one of the following:

a polar-coordinate-system parameter directly obtained in the sensing, which includes at least one of the following: a radial distance from the sensing object to the sensing node, a radial speed of the sensing object relative to the sensing node, and an angle of the sensing object relative to the sensing node, where the angle can further include an azimuth angle and an elevation angle; and

a rectangular-coordinate-system parameter obtained through coordinate transformation, which includes at least one of the following: coordinates of the sensing object in a rectangular coordinate system (for example, an x-axis coordinates, a y-axis coordinate, and a z-axis coordinate) and a speed of the sensing object in the rectangular coordinate system (for example, an x-direction speed, a y-direction speed, and a z-direction speed).

That is, in this embodiment of this application, the constraint condition for the upper limit of the time length of the signal transmission and reception slot is that the change in the first parameter of the sensing object within one signal transmission and reception slot needs to be less than the preset threshold. The sensing object type mainly describes the typical speed range and typical acceleration range of typical sensing objects in integrated sensing and communication scenarios. For example, a typical speed of a vehicle moving at a high speed is about 30 m/s, and while a typical speed of a pedestrian walking at a normal speed is about 1.3 m/s. Preset thresholds for distance change within one sensing frame for vehicle and pedestrian sensing are different.

Under the constraint of the above preset threshold, the upper limit of the duration of the signal transmission and reception slot is related to the sensing object type. Optionally, in some embodiments, the upper limit $T_1$ of the duration of the first slot satisfies at least one of the following:

$$T_1 \leq \frac{\Delta R}{v_{\max}},$$

where $\Delta R$ represents a distance change threshold of a sensing object within a first slot, and $v_{\max}$ represents a maximum value of a typical speed range of the sensing object;

$$T_1 \leq \frac{\Delta\phi * R}{v_{\max}},$$

where $\Delta\phi$ represents an angle change threshold of a sensing object within a first slot, R represents a distance of the sensing object, and $v_{\max}$ represents a maximum value of a typical speed range of the sensing object; and

$$T_1 \leq \frac{\Delta v}{a_{max}},$$

where $\Delta v$ represents a speed change threshold of a sensing object within a first slot, and $a_{max}$ represents a maximum value of a typical acceleration range of the sensing object.

In this embodiment of this application, it is assumed that within one first slot, a second preset threshold for the distance change of the sensing object is $\Delta R$, and a maximum value of the typical speed range of the sensing object is $v_{max}$. The value of the duration of the first slot should satisfy a first constraint:

$$T_s \leq \frac{\Delta R}{v_{max}}.$$

The first constraint requires that the distance change of the sensing object within one sensing frame is much smaller than that of the distance resolution, so that the distance of the sensing object within one sensing frame can be considered unchanged, and finally, sensing signal processing can be performed on echo signals of all sensing signal periods within one sensing frame to obtain a single piece of distance information of the sensing object.

It is assumed that within one first slot, a second preset threshold for the angle change of the sensing object is $\Delta\phi$, the distance of the sensing object is R, and a maximum value of the typical speed range of the sensing object is $v_{max}$. The value of the duration of the first slot should satisfy a second constraint:

$$T_s \leq \frac{\Delta\phi}{v_{max}/R}.$$

In one manner, the second preset threshold $\Delta\phi$ is set to be $\eta_2$ times as many as the angle resolution, where $\eta_2$ is a positive real number much smaller than 1. In the above formula, $v_{max}/R$ means that the sensing object moves, relative to the sensing node, at the maximum speed $v_{max}$ at a location with a distance of R to the sensing node in a direction perpendicular to a line connecting the sensing object and the sensing node, which is the extreme case of the angle change rate.

The second constraint requires that the angle change of the sensing object within one sensing frame is much smaller than the angle resolution, so that the angle of the sensing object within a sensing frame period can be considered unchanged, and finally, sensing signal processing can be performed on echo signals of all sensing signal periods within one sensing frame to obtain a single piece of distance information of the sensing object.

It is assumed that within one first slot, a second preset threshold for the speed change of the sensing object is $\Delta v$, and a maximum value of the typical acceleration range of the sensing object is $a_{max}$. The value of the duration of the first slot should satisfy a third constraint:

$$T_s \leq \frac{\Delta v}{a_{max}}.$$

The third constraint requires that the speed change of the sensing object within a sensing frame is much smaller than the speed resolution, so that the speed of the sensing object within one sensing frame can be considered unchanged, and finally, sensing signal processing can be performed on echo signals of all sensing signal periods within one sensing frame to obtain a single piece of distance information of the sensing object.

Optionally, in determining the upper limit of the duration of the first signal, the upper limit can be determined as any one of the following based on the sensing requirement of the sensing service:

satisfying all of a first constraint, a second constraint, and a third constraint, where for example, this is the case in a case that the sensing requirement is ranging, speed measurement, and angle measurement; satisfying two of a first constraint, a second constraint, and a third constraint, where for example, only the first constraint and the second constraint need to be satisfied in a case that the sensing requirement is ranging and angle measurement; and satisfying one of a first constraint, a second constraint, and a third constraint, where for example, only the first constraint needs to be satisfied in a case that the sensing requirement is ranging.

Optionally, after the value range of the duration of the first slot (that is, the upper limit of the duration of the first slot and the lower limit of the duration of the first slot) is determined, the initial duration of the first slot needs to be determined before performing the sensing process.

For a given sensing signal period, the duration of the first slot is directly proportional to the number N of sensing signal periods contained within the first slot. In addition, the value of N affects the echo signal power and echo signal to noise ratio (Signal to Noise Ratio, SNR) after coherent accumulation or non-coherent accumulation during one sensing signal processing.

In this embodiment of this application, in a case that other factors (for example, power and aperture) affecting echo signal power are given, the sensing performance and/or time resource allocation are further optimized by setting the duration of the first slot within the sensing frame.

Optionally, in some embodiments, one method to determine the initial duration of the first slot is: based on the sensing prior information or coverage area requirement of the sensing object in the sensing requirement, the target value of the echo signal power, and together with other given factors affecting the echo signal power, the required duration of the first slot is calculated using a radar equation.

Optionally, the sensing frame arrangement includes any one of the following:

a first arrangement, where the first arrangement is a serial arrangement between two adjacent sensing frames, such that a second slot of a third sensing frame does not overlap in time domain with a first slot of a fourth sensing frame, where the third sensing frame is a previous sensing frame of the fourth sensing frame; and
a second arrangement, where the second arrangement is a parallel arrangement between two adjacent sensing frames, such that a second slot of a fifth sensing frame at least partially overlaps in time domain with a first slot of a sixth sensing frame, where the fifth sensing frame is a previous sensing frame of the sixth sensing frame.

In this embodiment of this application, the third sensing frame and the fourth sensing frame are any two adjacent sensing frames, and the fifth sensing frame and the sixth sensing frame are any two adjacent sensing frames.

For the first arrangement, as shown in FIG. 4, in this arrangement, the sensing result of the n-th sensing frame can be used for signal parameter setting and resource scheduling of the (n+1)-th sensing frame and subsequent sensing frames.

For the second arrangement, as shown in FIG. 5, an offset between a start time of a first slot of the sixth sensing frame and a start time of a second slot of the fifth sensing frame is $T_{offset}$. If $T_{offset}=0$, it means that no dedicated time resources are allocated to the second slot, and signal transmission and reception between sensing frames are continuous at the granularity of sensing signal period. If $T_{offset}>0$, it means that there is a dedicated time resource allocated to the second slot. In this arrangement, the sensing result of the n-th sensing frame can be used for signal parameter setting and resource scheduling in the (n+2)-th sensing frame and subsequent sensing frames.

It should be noted that in some embodiments, the first device can determine the duration of a second slot and the sensing frame arrangement based on the sensing requirement and the capability information of the sensing node.

Optionally, the capability information can include at least one of the following: computing capability and parallel processing capability.

For example, in some embodiments, the duration of a second slot can be set based on a computing capability of the sensing node and a computational load of an algorithm corresponding to sensing QoS.

In integrated sensing and communication scenarios, whether the sensing frame arrangement adopts the first arrangement or the second arrangement depends on a parallel processing capability of the sensing node. The details are as follows:

if the sensing node has a parallel processing capability, the second arrangement can be adopted; and if the sensing node does not have a parallel processing capability, the first arrangement needs to be adopted.

Further, in a case that the arrangement in the initial configuration includes the second arrangement, the initial configuration can further include the value of $T_{offset}$.

Optionally, in a case that the bistatic radar adopts the second arrangement, both the transmitting device and the receiving device of the sensing node need to have a parallel processing capability.

It should be understood that if the first device is a sensing node, the first device can directly determine the duration of a second slot and the sensing frame arrangement. If the first device is a sensing function network element, before determining the duration of a second slot and the sensing frame arrangement, the capability information of the sensing node is first obtained. The capability information may be obtained by receiving the capability information transmitted by the sensing node, or querying the capability information of the sensing node from a sensing function network element or a network node accessible by a sensing function network element.

The determining, by the first device, a duration of a first slot of the second sensing frame based on the first indicator includes:
determining, by the first device, the duration of the first slot of the second sensing frame based on the first indicator, a first preset threshold, and a preset adjustment manner.

In this embodiment of this application, the duration of the first slot can be adjusted based on the echo signal quality obtained in the first sensing frame or the predicted result of the echo signal quality in the second sensing frame to obtain the duration of the first slot of the second sensing frame.

Optionally, the preset adjustment manner includes any one of the following:

increasing or decreasing the duration of the first slot by a fixed change amount;
increasing or decreasing the duration of the first slot by a target ratio; and
adjusting the duration of the first slot according to a preset configuration table, where the preset configuration table includes at least two first values, and the first values are parameter values of the first slot.

The increasing or decreasing the duration of the first slot by a fixed change amount can be understood as or replaced by increasing or decreasing the duration of the first slot of the second sensing frame according to the duration of the first slot of the first sensing frame and the fixed change amount. The increasing or decreasing the duration of the first slot by a target ratio can be understood as or replaced by increasing or decreasing the duration of the first slot of the second sensing frame according to the duration of the first slot of the first sensing frame and the target ratio.

In this embodiment of this application, the target ratio can be a fixed ratio or a dynamic ratio. For example, in some embodiments, the target ratio is a ratio of a target value to the first indicator, where the target value is determined based on the first preset threshold.

Optionally, the determining manner of the target value can be set depending on actual needs. For example, in a case that the first preset threshold includes one threshold, the target value is equal to the first preset threshold. In a case that the first preset threshold includes two thresholds, the target value can be equal to a geometric mean or arithmetic mean of the two thresholds.

It should be understood that the first preset threshold can include one or more thresholds. In the case of different included thresholds, corresponding preset adjustment manners are different.

For example, in some embodiments, the first preset threshold includes one threshold, and an adjustment rule of the duration of the first slot satisfies at least one of the following:

decreasing the duration of the first slot or keeping the duration of the first slot unchanged in a case that the first indicator is greater than the one threshold; and increasing the duration of the first slot in a case that the first indicator is less than the one threshold.

Optionally, in some embodiments, the first preset threshold includes a first threshold and a second threshold, the first threshold is less than the second threshold, and an adjustment rule of the duration of the first slot satisfies at least one of the following:

decreasing the duration of the first slot or keeping the duration of the first slot unchanged in a case that the first indicator is greater than the second threshold; and increasing the duration of the first slot in a case that the first indicator is less than the first threshold.

Optionally, in some embodiments, the preset threshold includes a third threshold and a fourth threshold, and an adjustment rule of the duration of the first slot satisfies at least one of the following:

decreasing the duration of the first slot in a case that the first indicator is greater than the third threshold and a deviation between the first indicator and the third threshold is greater than the fourth threshold; and increasing the duration of the first slot in a case that the first indicator is less than the third threshold and the deviation between the third threshold and the first indicator is greater than the fourth threshold.

It should be understood that the deviation can be determined based on a difference, a square of a difference, a ratio, and the like. This is not further limited herein. The above adjustment rules can be understood as or replaced by the determining rules for the first slot of the second sensing frame.

The following provides example descriptions for adjusting the duration of the first slot in different adjustment manners.

In the manner of increasing or decreasing the duration of the first slot by the fixed change amount, if the first indicator is greater than the first preset threshold, the duration of the first slot of the first sensing frame is reduced by a fixed duration and then used as the duration of the first slot of the second sensing frame. If the first indicator is less than the first preset threshold, the duration of the first slot is increased by a fixed duration and then used as the duration of the first slot of the second sensing frame.

Optionally, in some embodiments, in a case that the first indicator is greater than the first preset threshold, the value of the duration of the first slot can be kept unchanged.

Optionally, the first preset threshold can be one threshold, or can include a first threshold and a second threshold, and the first threshold is less than the second threshold. In a case that the first preset threshold includes the first threshold and the second threshold, the first indicator being greater than the first preset threshold can be understood as the first indicator being greater than the second threshold, and the first indicator being less than the first preset threshold can be understood as the first indicator being less than the first threshold.

In the manner of increasing or decreasing the duration of the first slot by the target ratio, if the first indicator is less than or greater than the first preset threshold, the duration $N'$ of the first slot of the second sensing frame satisfies:

$$N' = \left\lceil \frac{P_0}{P} N \right\rceil.$$

N represents the duration of the first slot of the first sensing frame, P represents the value of the first indicator; $P_0$ represents the target value. For example, in a case that the first preset threshold is one threshold, $Q_0$ is the first preset threshold. In a case that the first preset threshold includes the first threshold and the second threshold, and that the first threshold is less than the second threshold, a geometric mean or arithmetic mean of the first threshold and the second threshold can be used as $Q_0$. In addition, the first indicator being greater than the first preset threshold can be understood as the first indicator being greater than the second threshold, and the first indicator being less than the first preset threshold can be understood as the first indicator being less than the first threshold.

The manner of adjusting the duration of the first slot according to the preset configuration table can be understood as follows: the duration of the first slot includes at least one array which includes multiple first values of different magnitudes, the first value representing the duration of the first slot. In a case that the sensing update frame period needs to be increased or decreased, a new first value that is increased or decreased can be selected from the array based on the value of the duration of the first slot to serve as an updated duration of the first slot. For example, the first preset threshold includes a third threshold and a fourth threshold. If the first indicator is greater than the third threshold and a deviation between the first indicator and the third threshold is greater than the fourth threshold, a new first value that is decreased is selected from the array to serve as the updated duration of the first slot. If the first indicator is less than the third threshold and a deviation between the fourth threshold and the first indicator is greater than the fourth threshold, a new first value that is increased is selected from the array to serve as the updated duration of the first slot.

Optionally, the determining manner of the first indicator may be set depending on an actual need. For example, in some embodiments, in a case that the first device includes a receiving device in the sensing node, the obtaining, by a first device, a first indicator includes:

receiving, by the first device, a first signal based on a duration of a first slot of the first sensing frame to obtain echo data;
determining, by the first device, a target sensing result based on the echo data, where the target sensing result satisfies: the target sensing result includes result information indicating whether the sensing object is detected, and in a case that the sensing object is detected, the target sensing result further includes the first indicator; and
determining, by the first device, the first indicator based on the target sensing result.

For example, in some embodiments, in a case that the first device is a sensing function network element or a transmitting device in the sensing node, before the obtaining, by a first device, a first indicator, the method further includes:

receiving, by the first device, second information from a receiving device in the sensing node, where the second information includes any one of: echo data, an intermediate sensing result obtained by performing a first operation on the echo data, a target sensing result obtained by performing a second operation on the echo data, and the first indicator, where the echo data is data obtained by the receiving device in the sensing node performing a sensing task based on the duration of the first slot of the first sensing frame, the first operation is a partial operation of the second operation, the target sensing result satisfies: the target sensing result includes result information indicating whether the sensing object is detected, and in a case that the sensing object is detected, the target sensing result further includes the first indicator; and
determining, by the first device, the first indicator based on the second information.

In this embodiment of this application, in a case that the first device includes a transmitting device in the sensing node, the first device further needs to transmit the first signal based on the duration of the first slot of the first sensing frame.

Optionally, in a case that the second information includes echo data, the first device can perform second operation on the echo data to obtain the first indicator. In a case that the second information includes an intermediate sensing result, the first device can perform a remaining operation of the second operation other than the first operation on the intermediate sensing result to obtain the first indicator. In a case that the second information includes a target sensing result, the first device can directly parse the second information to obtain the first indicator.

Optionally, the method further includes at least one of the following:

in a case that the first device is a receiving device in the sensing node, transmitting, by the first device, first indication information to a first target device, where the first indication information is used to indicate an adjusted duration of the first slot, and the first target device includes a transmitting device in the sensing node or includes a transmitting device in the sensing node and a sensing function network element;
in a case that the first device is a transmitting device in the sensing node, transmitting, by the first device, first indication information to a second target device, where the first indication information is used to indicate an adjusted duration of the first slot, and the second target device includes a receiving device in the sensing node or includes a receiving device in the sensing node and a sensing function network element; and
in a case that the first device is a sensing function network element, transmitting, by the first device, first indication information to a transmitting device and receiving device in the sensing node, where the first indication information is used to indicate an adjusted duration of the first slot.

It should be noted that in a case that the first device is a sensing node, if a sensing function network element needs to participate in calculation or processing of the echo data, the sensing node needs to indicate the adjusted duration of the first slot to the sensing function network element.

Optionally, after the determining, by the first device, a duration of a first slot of the second sensing frame based on the first indicator, the method further includes at least one of the following:

in a case that the first device includes a transmitting device in the sensing node, transmitting, by the first device, a first signal based on the adjusted duration of the first slot; and

in a case that the first device includes a receiving device in the sensing node, receiving, by the first device, the first signal based on the adjusted duration of the first slot.

Optionally, the echo signal quality can include or represent at least one of the following: echo signal power, signal to noise ratio (Signal to Noise Ratio, SNR) of echo signal, signal to interference noise ratio (Signal to Interference Noise Ratio, SINR) of echo signal, reference signal received power (Reference Signal Received Power, RSRP), and reference signal received quality (Reference Signal Received Quality, RSRQ).

To better understand this application, the following provides detailed description by using some examples.

In some embodiments, the transmitting device of the sensing node and the receiving device of the sensing node belong to a same device. In a case that the sensing node performs the sensing service in a self-transmit and self-receive manner, a procedure of adaptively adjusting the duration of the first slot is as follows:

Step 1. The sensing node or the sensing function network element obtains the first information used for sensing signal configuration.

Step 2. The sensing node or the sensing function network element sets the value range and initial duration of the first slot in the sensing frame based on a Doppler measurement resolution requirement in the sensing requirement and a sensing object type; and determines the duration of a second slot and the sensing frame arrangement based on the sensing requirement and the capability information of the sensing node.

Optionally, if the device performing the above operations is a sensing function network element, before performing the above process, the procedure further includes the sensing function network element obtaining the capability information of the sensing node. After performing the above process, the procedure further includes the sensing function network element transmitting the initial duration of the first slot, the duration of a second slot, and the sensing frame arrangement to the sensing node.

Step 3. The sensing node performs sensing frame parameter configuration based on the initial duration of the first slot, the duration of a second slot, and the sensing frame arrangement, performs the transmission and reception of the first signal based on the sensing frame parameter configuration, and obtains the echo data. The sensing node and/or the sensing function network element performs sensing signal processing on the echo data. Specifically, one of the following options can be included:

the sensing node performs sensing signal processing on the echo data to generate the first sensing result;

the sensing node performs partial operation of the sensing signal processing on the echo data to obtain an intermediate sensing result, and transmits the intermediate sensing result to the sensing function network element, and the sensing function network element performs the remaining partial operation of the sensing signal processing to generate the first sensing result; and

the sensing node transmits the echo data to the sensing function network element, and the sensing function network element performs sensing signal processing on the echo data to generate the first sensing result.

The first sensing result includes: whether the sensing object is detected, and the echo signal quality in a case that the sensing object is detected.

If the first sensing result shows that the sensing object is not detected, this step is repeated. If the first sensing result shows that the sensing object is detected, a next step of the procedure is proceeded.

Step 4. The sensing node or the sensing function network element adjusts the duration of the first slot based on echo signal quality in the target sensing result.

In a case that this step is proceeded for the first time, the target sensing result is the first sensing result in step 3. Otherwise, the target sensing result is the second sensing result in step 5.

Whether the target sensing result is generated by the sensing node or the sensing function network element, and whether the device that adjusts the duration of the first slot is the sensing node or the sensing function network element includes one of the following cases:

the target sensing result is generated by the sensing node, the device that adjusts the duration of the first slot is the sensing node, and there is no need to interact the target sensing result and the adjusted duration of the first slot;

the target sensing result is generated by the sensing node, the device that adjusts the duration of the first slot is the sensing function network element, before adjusting the duration of the first slot, the sensing node needs to transmit the target sensing result to the sensing function network element, and after adjusting the duration of the first slot, the sensing function network element needs to transmit the adjusted duration of the first slot to the sensing node; the target sensing result is generated by the sensing function network element, the device that adjusts the duration of the first slot is the sensing node, before adjusting the duration of the first slot, the sensing function network element needs to transmit the target sensing result to the sensing node; and the target sensing result is generated by the sensing function network element, and the device that adjusts the duration of the first slot is the sensing function network element, and after adjusting the duration of the first slot, the sensing function network element needs to transmit the adjusted duration of the first slot to the sensing node.

Step 5. The sensing node adjusts the transmission and reception of the first signal based on the adjusted duration of the first slot, and obtains the echo data. The sensing node and/or the sensing function network element performs sensing signal processing and/or data processing on the target echo data to obtain the echo signal quality and/or the first parameter of the sensing object, which includes one of the following options:

the sensing node performs sensing signal processing and/or data processing on the echo data to obtain the second sensing result; the sensing node performs partial operation of the sensing signal processing and/or data processing on the echo data to obtain an intermediate sensing result, and transmits the intermediate sensing result to the sensing function network element, and the sensing function network element performs the remaining partial operation of the sensing signal processing and/or data processing to obtain the second sensing result; and the sensing node transmits the echo data to the sensing function network element, and the sensing function network element performs sensing signal processing and/or data processing on the echo data to obtain the second sensing result.

The second sensing result includes: whether the sensing object is detected, and the echo signal quality, the first parameter of the sensing object, a filter value of the first parameter, and/or a predicted value of the first parameter in a case that the sensing object is detected. Finally, steps 4 and 5 are repeated until the sensing process ends.
In some embodiments, the transmitting device of the sensing node and the receiving device of the sensing node belong to different devices. In a case that the sensing service is performed in a manner of the transmitting device transmitting the first signal and the receiving device receiving the first signal, a procedure of adaptively adjusting the duration of the first slot is as follows:

Step 1. A transmit-end device, a receive-end device, or a sensing function network element obtains the first information used for sensing signal configuration.
Step 2. The transmit-end device, the receive-end device, or the sensing function network element sets the duration value range and initial duration of the first slot in the sensing frame based on a Doppler measurement resolution requirement in the sensing requirement and a sensing object type; and determines the duration of a second slot and the sensing frame arrangement based on the sensing requirement and the capability information of the sensing node.

Optionally, if the device performing the above operations is a sensing function network element, before performing the above process, the procedure further includes the sensing function network element obtaining capability information of the transmitting device and receiving device. After performing the above process, the procedure further includes the sensing function network element transmitting the initial duration of the first slot, the duration of a second slot, and the sensing frame arrangement to the transmitting device and receiving device. If the device performing the above operations is the transmitting device, before performing the above process, the procedure further includes the transmitting device obtaining the capability information of the receiving device, and after performing the above process, the procedure further includes the transmitting device transmitting the initial duration of the first slot, the duration of a second slot, and the sensing frame arrangement to at least one of the receiving device and the sensing function network element. If the device performing the above operations is the receiving device, before performing the above process, the procedure further includes the receiving device obtaining the capability information of the transmitting device, and after performing the above process, the procedure further includes the receiving device transmitting the initial duration of the first slot, the duration of a second slot, and the sensing frame arrangement to at least one of the transmitting device and the sensing function network element.
Step 3. The transmit-end device and the receive-end device perform the transmission and reception of the first signal based on the initial duration of the first slot, the duration of a second slot, and the sensing frame arrangement, the receiving device obtains the echo data; and the receive-end device and/or sensing function network element performs sensing signal processing on the echo data. Specifically, one of the following options can be included:

the receive-end device performs sensing signal processing on the echo data to generate the first sensing result;

the receive-end device performs partial operation of the sensing signal processing on the echo data to obtain an intermediate sensing result, and transmits the intermediate sensing result to the sensing function network element, and the sensing function network element performs the remaining partial operation of the sensing signal processing to generate the first sensing result; and

the receive-end device transmits the echo data to the sensing function network element, and the sensing function network element performs sensing signal processing on the echo data to generate the first sensing result.

The first sensing result includes: whether the sensing object is detected, and the echo signal quality in a case that the sensing object is detected.

If the first sensing result shows that the sensing object is not detected, this step is repeated. If the first sensing result shows that the sensing object is detected, a next step of the procedure is proceeded.

Step 4. The transmit-end device, receive-end device, or sensing function network element adjusts the duration of the first slot based on echo signal quality in the target sensing result.

In a case that this step is proceeded for the first time, the target sensing result is the first sensing result in step 3. Otherwise, the target sensing result is the second sensing result in step 5.

The target sensing result is generated by the receive-end device, the device that adjusts the duration of the first slot is the receive-end device, after adjusting the duration of the first slot, the receive-end device needs to transmit the adjusted duration of the first slot to the transmit-end device;

the target sensing result is generated by the receive-end device, the device that adjusts the duration of the first slot is the sensing function network element, before adjusting the duration of the first slot, the receive-end device needs to transmit the target sensing result to the sensing function network element, and after adjusting the duration of the first slot, the sensing function network element needs to transmit the adjusted duration of the first slot to the transmit-end device and the receive-end device;

the target sensing result is generated by the receive-end device, the device that adjusts the duration of the first slot is the transmit-end device, before adjusting the duration of the first slot, the receive-end device needs to transmit the target sensing result to the transmit-end device, and after adjusting the duration of the first slot, the transmit-end device needs to transmit the adjusted duration of the first slot to the receive-end device;

the target sensing result is generated by the sensing function network element, the device that adjusts the duration of the first slot is the sensing function network element, after adjusting the duration of the first slot, the sensing function network element needs to transmit the adjusted duration of the first slot to the transmit-end device and the receive-end device;

the target sensing result is generated by the sensing function network element, the device that adjusts the duration of the first slot is the transmit-end device, before adjusting the duration of the first slot, the sensing function network element needs to transmit the target sensing result to the transmit-end device, and after adjusting the duration of the first slot, the transmit-end device needs to transmit the adjusted duration of the first slot to the receive-end device and the sensing function network element; and

the target sensing result is generated by the sensing function network element, the device that adjusts the duration of the first slot is the receive-end device, before adjusting the duration of the first slot, the sensing function network element needs to transmit the target sensing result to the receive-end device, and after adjusting the duration of the first slot, the receive-end device needs to transmit the adjusted duration of the first slot to the transmit-end device and the sensing function network element.

Step 5. The sensing node adjusts the transmission and reception of the first signal based on the adjusted duration of the first slot, and obtains the echo data. The sensing node and/or the sensing function network element performs sensing signal processing and/or data processing on the target echo data to obtain the echo signal quality and/or the first parameter of the sensing object, which includes one of the following options:

the sensing node performs sensing signal processing and/or data processing on the echo data to obtain the second sensing result;

the sensing node performs partial operation of the sensing signal processing and/or data processing on the echo data to obtain an intermediate sensing result, and transmits the intermediate sensing result to the sensing function network element, and the sensing function network element performs the remaining partial operation of the sensing signal processing and/or data processing to obtain the second sensing result; and

the sensing node transmits the echo data to the sensing function network element, and the sensing function network element performs sensing signal processing and/or data processing on the echo data to obtain the second sensing result.

The second sensing result includes: whether the sensing object is detected, and the echo signal quality, the first parameter of the sensing object, a filter value of the first parameter, and/or a predicted value of the first parameter in a case that the sensing object is detected. Finally, steps 4 and 5 are repeated until the sensing process ends.

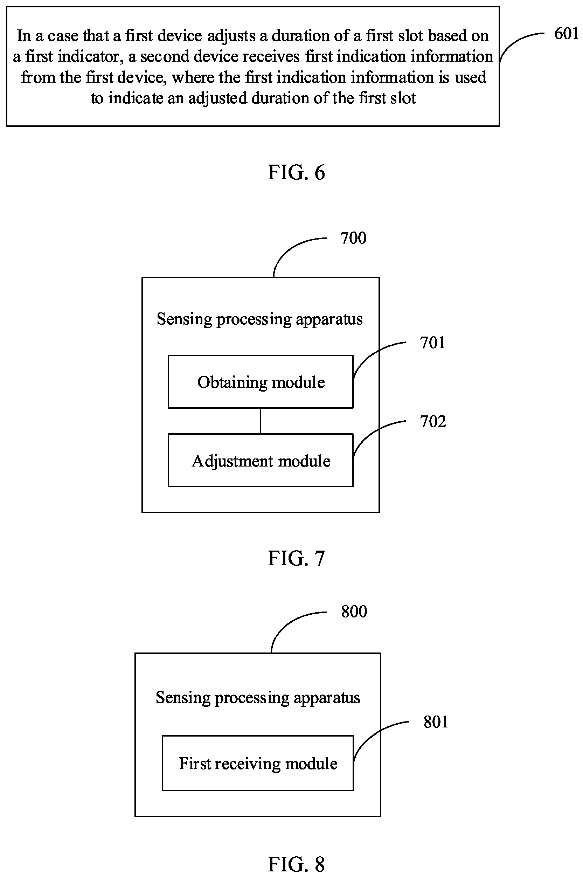

Referring to FIG. 6, an embodiment of this application further provides another sensing processing method. As shown in FIG. 6, the sensing processing method includes the following step.

Step 601. In a case that a first device adjusts a duration of a first slot based on a first indicator, a second device receives first indication information from the first device, where the first indicator includes echo signal quality within a first sensing frame or predicted echo signal quality within a second sensing frame, the second sensing frame is a sensing frame following the first sensing frame, a sensing frame includes a first slot for performing signal transmission and reception, and the first indication information is used to indicate a duration of a first slot of the second sensing frame.

In a case that the first device is a sensing function network element, the second device includes at least one of a receiving device in a sensing node and a transmitting device in the sensing node; in a case that the first device is a receiving device in a sensing node, the second device includes at least one of a transmitting device in the sensing node and a sensing function network element; and in a case that the first device is a transmitting device in a sensing node, the second device includes at least one of a receiving device in the sensing node and a sensing function network element.

Optionally, the method further includes at least one of the following:

in a case that the second device includes a transmitting device in a sensing node, transmitting, by the second device, a first signal based on an adjusted duration of the first slot; and
in a case that the second device includes a receiving device in a sensing node, obtaining, by the second device, a first signal based on an adjusted duration of the first slot to obtain echo data; and transmitting second information to the first device or a sensing function network element, where the second information includes echo data, an intermediate sensing result obtained by performing a first operation on the echo data, or a target sensing result obtained by performing a second operation on the echo data, where the echo data is data obtained by the receiving device in the sensing node performing a sensing task based on the duration of the first slot of the first sensing frame, the first operation is a partial operation of the second operation, the target sensing result satisfies: the target sensing result includes result information indicating whether the sensing object is detected, and in a case that the sensing object is detected, the target sensing result further includes the first indicator.

Optionally, before the receiving, by a second device, first indication information from the first device, the method further includes:
receiving, by the second device, second indication information from the first device, where the second indication information is used to indicate an initial configuration, and the initial configuration includes at least one of the following: configuration information of a first slot, a duration of a second slot, and sensing frame arrangement, where the second slot is a slot in a sensing frame for performing an operation other than signal transmission and reception.

Optionally, the configuration information of a first slot includes at least one of the following: an initial duration of the first slot, an upper limit of the duration of the first slot, and a lower limit of the duration of the first slot.

Optionally, the lower limit of the duration of the first slot is equal to a reciprocal of a Doppler resolution requirement, and the Doppler resolution requirement is included in the sensing QoS.

Optionally, the upper limit $T_1$ of the duration of the first slot satisfies at least one of the following:

$$T_1 \leq \frac{\Delta R}{v_{\max}},$$

where $\Delta R$ represents a distance change threshold of a sensing object within a first slot, and $v_{\max}$ represents a maximum value of a typical speed range of the sensing object;

$$T_1 \leq \frac{\Delta \phi * R}{v_{\max}},$$

where $\Delta \phi$ represents an angle change threshold of a sensing object within a first slot, $R$ represents a distance of the sensing object, and $v_{\max}$ represents a maximum value of a typical speed range of the sensing object; and

$$T_1 \leq \frac{\Delta v}{a_{\max}},$$

where $\Delta v$ represents a speed change threshold of a sensing object within a first slot, and $a_{\max}$ represents a maximum value of a typical acceleration range of the sensing object.

Optionally, the sensing frame arrangement includes any one of the following:

a first arrangement, where the first arrangement is a serial arrangement between two adjacent sensing frames, such that a second slot of a third sensing frame does not overlap in time domain with a first slot of a fourth sensing frame, where the third sensing frame is a previous sensing frame of the fourth sensing frame; and

a second arrangement, where the second arrangement is a parallel arrangement between two adjacent sensing frames, such that a second slot of a fifth sensing frame at least partially overlaps in time domain with a first slot of a sixth sensing frame, where the fifth sensing frame is a previous sensing frame of the sixth sensing frame.

Optionally, the echo signal quality can include or represent at least one of the following: echo signal power of a sensing object, SNR of the sensing object, SINR of the sensing object, RSRP, and RSRQ.

Referring to FIG. 7, an embodiment of this application provides a sensing processing apparatus, applied to a first device. As shown in FIG. 7, the sensing processing apparatus 700 includes:

an obtaining module 701, configured to obtain a first indicator, where the first indicator includes echo signal quality within a first sensing frame or predicted echo signal quality within a second sensing frame, the second sensing frame is a sensing frame following the first sensing frame, and a sensing frame includes a first slot for performing signal transmission and reception; and

an adjustment module 702, configured to adjust a duration of a first slot of the second sensing frame based on the first indicator.

Optionally, the sensing processing apparatus 700 further includes a first determining module.

The obtaining module 701 is further configured to obtain target information, where the target information includes at least one of first information and capability information of a sensing node, and the first information includes at least one of a sensing target region, a sensing object type, sensing quality of service QoS, sensing prior information, and location information of the sensing node.

The first determining module is configured to determine an initial configuration based on the target information, where the initial configuration includes at least one of the following: configuration information of a first slot, a duration of a second slot, and sensing frame arrangement, where the second slot is a slot in a sensing frame for performing an operation other than signal transmission and reception.

Optionally, the configuration information of a first slot includes at least one of the following: an initial duration of the first slot, an upper limit of the duration of the first slot, and a lower limit of the duration of the first slot.

Optionally, the first determining module is specifically configured to execute at least one of the following:

determining the lower limit of the duration of the first slot based on a Doppler resolution requirement, where the Doppler resolution requirement is included in the sensing QoS;
determining the upper limit of the duration of the first slot based on the sensing object type; and
determining the initial duration of the first slot based on at least one of the sensing object type and the sensing prior information.

Optionally, the lower limit of the duration of the first slot is equal to a reciprocal of the Doppler resolution requirement.

Optionally, the upper limit $T_1$ of the duration of the first slot satisfies at least one of the following:

$$T_1 \le \frac{\Delta R}{v_{\max}},$$

where $\Delta R$ represents a distance change threshold of a sensing object within a first slot, and $v_{\max}$ represents a maximum value of a typical speed range of the sensing object;

$$T_1 \le \frac{\Delta\phi * R}{v_{\max}},$$

where $\Delta\phi$ represents an angle change threshold of a sensing object within a first slot, R represents a distance of the sensing object, and $v_{\max}$ represents a maximum value of a typical speed range of the sensing object; and

$$T_1 \le \frac{\Delta v}{a_{\max}},$$

where $\Delta v$ represents a speed change threshold of a sensing object within a first slot, and $a_{\max}$ represents a maximum value of a typical acceleration range of the sensing object.

Optionally, the sensing frame arrangement includes any one of the following:

a first arrangement, where the first arrangement is a serial arrangement between two adjacent sensing frames, such that a second slot of a third sensing frame does not overlap in time domain with a first slot of a fourth sensing frame, where the third sensing frame is a previous sensing frame of the fourth sensing frame; and
a second arrangement, where the second arrangement is a parallel arrangement between two adjacent sensing frames, such that a second slot of a fifth sensing frame at least partially overlaps in time domain with a first slot of a sixth sensing frame, where the fifth sensing frame is a previous sensing frame of the sixth sensing frame.

Optionally, the adjustment module 702 is specifically configured to determine the duration of the first slot of the second sensing frame based on the first indicator, a first preset threshold, and a preset adjustment manner.

Optionally, the preset adjustment manner includes any one of the following:

increasing or decreasing the duration of the first slot by a fixed change amount;
increasing or decreasing the duration of the first slot by a target ratio; and
adjusting the duration of the first slot according to a preset configuration table, where the preset configuration table includes at least two first values, and the first values are parameter values of the first slot.

Optionally, the target ratio is a ratio of a target value to the first indicator, and the target value is determined based on the first preset threshold.

Optionally, the first preset threshold includes one threshold, and an adjustment rule of the duration of the first slot satisfies at least one of the following:

decreasing the duration of the first slot or keeping the duration of the first slot unchanged in a case that the first indicator is greater than the one threshold; and
increasing the duration of the first slot in a case that the first indicator is less than the one threshold.

Optionally, the first preset threshold includes a first threshold and a second threshold, the first threshold is less than the second threshold, and an adjustment rule of the duration of the first slot satisfies at least one of the following:

decreasing the duration of the first slot or keeping the duration of the first slot unchanged in a case that the first indicator is greater than the second threshold; and
increasing the duration of the first slot in a case that the first indicator is less than the first threshold.

Optionally, the preset threshold includes a third threshold and a fourth threshold, and an adjustment rule of the duration of the first slot satisfies at least one of the following:

decreasing the duration of the first slot in a case that the first indicator is greater than the third threshold and a deviation between the first indicator and the third threshold is greater than the fourth threshold; and

increasing the duration of the first slot in a case that the first indicator is less than the third threshold and the deviation between the third threshold and the first indicator is greater than the fourth threshold.

Optionally, in a case that the first device includes a receiving device in the sensing node, the obtaining module 701 is specifically configured to perform the following operations:

receiving a first signal based on a duration of a first slot of the first sensing frame to obtain echo data; determining a target sensing result based on the echo data, where the target sensing result satisfies: the target sensing result includes result information indicating whether a sensing object is detected, and in a case that the sensing object is detected, the target sensing result further includes the first indicator; and
determining the first indicator based on the target sensing result.

Optionally, in a case that the first device is a sensing function network element or a transmitting device in the sensing node, the sensing processing apparatus further includes:

a second receiving module, configured to receive second information from a receiving device in the sensing node, where the second information includes any one of: echo data, an intermediate sensing result obtained by performing a first operation on the echo data, a target sensing result obtained by performing a second operation on the echo data, and the first indicator, where the echo data is data obtained by the receiving device in the sensing node performing a sensing task based on the duration of the first slot of the first sensing frame, the first operation is a partial operation of the second operation, the target sensing result satisfies: the target sensing result includes result information indicating whether the sensing object is detected, and in a case that the sensing object is detected, the target sensing result further includes the first indicator; and
a second determining module, configured to determine the first indicator based on the second information.

Optionally, the sensing processing apparatus further includes a transmit module, and the transmit module is configured to execute at least one of the following:

in a case that the first device is a receiving device in the sensing node, transmitting first indication information to a first target device, where the first indication information is used to indicate an adjusted duration of the first slot, and the first target device includes a transmitting device in the sensing node or includes a transmitting device in the sensing node and a sensing function network element;

in a case that the first device is a transmitting device in the sensing node, transmitting first indication information to a second target device, where the first indication information is used to indicate an adjusted duration of the first slot, and the second target device includes a receiving device in the sensing node or includes a receiving device in the sensing node and a sensing function network element; and

in a case that the first device is a sensing function network element, transmitting first indication information to a transmitting device and receiving device in the sensing node, where the first indication information is used to indicate an adjusted duration of the first slot.

Optionally, the sensing processing apparatus further includes:

a transmitting module, configured to: in a case that the first device includes a transmitting device in a sensing node, transmit a first signal based on an adjusted duration of the first slot; and

a second receiving module, configured to: in a case that the first device includes a receiving device in the sensing node, receive the first signal based on the adjusted duration of the first slot.

Optionally, the echo signal quality can include or represent at least one of the following: echo signal power of a sensing object, SNR of the sensing object, SINR of the sensing object, RSRP, and RSRQ.

Referring to FIG. 8, an embodiment of this application provides a sensing processing apparatus, applied to a second device. As shown in FIG. 8, the sensing processing apparatus 800 includes:

a first receiving module 801 configured to: in a case that a first device adjusts a duration of a first slot based on a first indicator, receive first indication information from the first device, where the first indicator includes echo signal quality within a first sensing frame or predicted echo signal quality within a second sensing frame, the second sensing frame is a sensing frame following the first sensing frame, a sensing frame includes a first slot for performing signal transmission and reception, and the first indication information is used to indicate a duration of a first slot of the second sensing frame.

In a case that the first device is a sensing function network element, the second device includes at least one of a receiving device in a sensing node and a transmitting device in the sensing node; in a case that the first device is a receiving device in a sensing node, the second device includes at least one of a transmitting device in the sensing node and a sensing function network element; and in a case that the first device is a transmitting device in a sensing node, the second device includes at least one of a receiving device in the sensing node and a sensing function network element.

Optionally, the sensing processing apparatus further includes an execution module configured to execute at least one of the following:

in a case that the second device includes a transmitting device in a sensing node, transmitting a first signal based on an adjusted duration of the first slot; and

in a case that the second device includes a receiving device in a sensing node, obtaining a first signal based on an adjusted duration of the first slot to obtain echo data; and transmitting second information to the first device or a sensing function network element, where the second information includes echo data, an intermediate sensing result obtained by performing a first operation on the echo data, or a target sensing result obtained by performing a second operation on the echo data, where the echo data is data obtained by the receiving device in the sensing node performing a sensing task based on the duration of the first slot of the first sensing frame, the first operation is a partial operation of the second operation, the target sensing result satisfies: the target sensing result includes result information indicating whether the sensing object is detected, and in a case that the sensing object is detected, the target sensing result further includes the first indicator.

Optionally, the first receiving module 801 is further configured to receive second indication information from the first device, where the second indication information is used to indicate an initial configuration, and the initial configuration includes at least one of the following: configuration information of a first slot, a duration of a second slot, and sensing frame arrangement, where the second slot is a slot in a sensing frame for performing an operation other than signal transmission and reception.

Optionally, the configuration information of a first slot includes at least one of the following: an initial duration of the first slot, an upper limit of the duration of the first slot, and a lower limit of the duration of the first slot.

Optionally, the lower limit of the duration of the first slot is equal to a reciprocal of a Doppler resolution requirement, and the Doppler resolution requirement is included in the sensing QoS.

Optionally, the upper limit $T_1$ of the duration of the first slot satisfies at least one of the following:

$$T_1 \leq \frac{\Delta R}{v_{max}},$$

where $\Delta R$ represents a distance change threshold of a sensing object within a first slot, and $v_{max}$ represents a

maximum value of a typical speed range of the sensing object;

$$T_1 \leq \frac{\Delta\phi * R}{v_{\max}},$$

where $\Delta\phi$ represents an angle change threshold of a sensing object within a first slot, R represents a distance of the sensing object, and $v_{\max}$ represents a maximum value of a typical speed range of the sensing object; and

$$T_1 \leq \frac{\Delta v}{a_{\max}},$$

where $\Delta v$ represents a speed change threshold of a sensing object within a first slot, and $a_{\max}$ represents a maximum value of a typical acceleration range of the sensing object.

Optionally, the sensing frame arrangement includes any one of the following:

a first arrangement, where the first arrangement is a serial arrangement between two adjacent sensing frames, such that a second slot of a third sensing frame does not overlap in time domain with a first slot of a fourth sensing frame, where the third sensing frame is a previous sensing frame of the fourth sensing frame; and

a second arrangement, where the second arrangement is a parallel arrangement between two adjacent sensing frames, such that a second slot of a fifth sensing frame at least partially overlaps in time domain with a first slot of a sixth sensing frame, where the fifth sensing frame is a previous sensing frame of the sixth sensing frame.

Optionally, the echo signal quality can include or represent at least one of the following: echo signal power of a sensing object, SNR of the sensing object, SINR of the sensing object, RSRP, and RSRQ.

The sensing processing apparatus provided in this embodiment of this application is capable of implementing the processes implemented in the method embodiments in FIG. 2 and FIG. 6, with the same technical effects achieved. To avoid repetition, details are not described herein again.

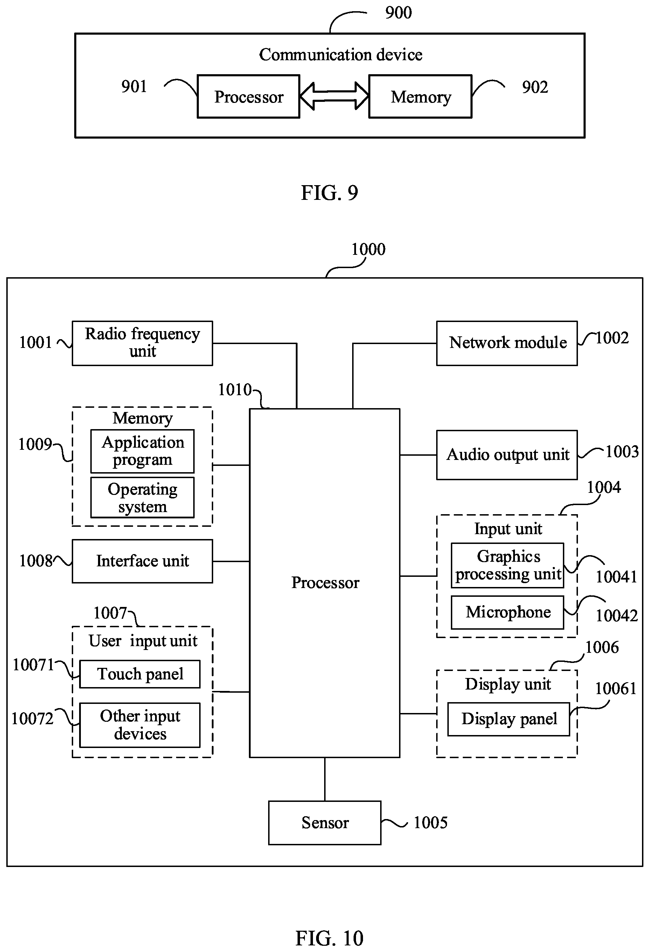

Optionally, as shown in FIG. 9, an embodiment of this application further provides a communication device 900 including a processor 901 and a memory 902. The memory 902 stores a program or an instruction capable of running on the processor 901. When the program or instruction is executed by the processor 901, the steps of the foregoing embodiment of the sensing processing method are implemented, with the same technical effects achieved. To avoid repetition, details are not described herein again.

An embodiment of this application further provides a terminal including a processor and a communication interface. The communication interface is configured to obtain a first indicator. In a case that the terminal is a first device, the first indicator includes echo signal quality within a first sensing frame or predicted echo signal quality within a second sensing frame, the second sensing frame is a sensing frame following the first sensing frame, and a sensing frame includes a first slot for performing signal transmission and reception; and the processor is configured to determine a duration of a first slot of the second sensing frame based on the first indicator.

Alternatively, in a case that the terminal is a second device, the communication interface is configured to: in a case that a first device adjusts a duration of a first slot based on a first indicator, receive first indication information from the first device, where the first indicator includes echo signal quality within a first sensing frame or predicted echo signal quality within a second sensing frame, the second sensing frame is a sensing frame following the first sensing frame, a sensing frame includes a first slot for performing signal transmission and reception, and the first indication information is used to indicate a duration of a first slot of the second sensing frame.

In a case that the first device is a sensing function network element, the second device includes at least one of a receiving device in a sensing node and a transmitting device in the sensing node; in a case that the first device is a receiving device in a sensing node, the second device includes a transmitting device in the sensing node; and in a case that the first device is a transmitting device in a sensing node, the second device includes a receiving device in the sensing node.

This terminal embodiment corresponds to the foregoing sensing node method embodiment. All processes and implementations in the foregoing method embodiment can be applicable to this terminal embodiment, with the same technical effects achieved. Specifically, FIG. 10 is a schematic diagram of a hardware structure of a terminal for implementing the embodiments of this application.

The terminal 1000 includes but is not limited to at least part of these components: a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 10 does not constitute any limitation on the terminal, and the terminal may include more or fewer components than shown in the figure, or combine some of the components, or have different arrangements of the components. Details are not described herein.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, and the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (for example, a volume control key or a power on/off key), a trackball, a mouse, a joystick, and the like. Details are not described herein.

In an embodiment of this application, the radio frequency unit 1001 receives downlink data from a network-side device and transmits the data to the processor 1010 for processing; and the radio frequency unit 1001 can additionally transmit uplink data to the network-side device. Generally, the radio frequency unit 1001 includes but is not limited to an antenna, an amplifier, a transceiver, a coupler, a low noise amplifier, and a duplexer.

The memory 1009 may be configured to store software programs or instructions and various data. The memory 1009 may include a first storage area for storing a program or instruction and second storage area for storing data. The first storage area may store an operating system, an application program or an instruction required by at least one function (for example, sound play function or image play function), and the like. Additionally, the memory 1009 may be a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in the embodiments of this application includes but is not limited to these or any other applicable types of memories.

The processor 1010 may include one or more processing units. Optionally, the processor 1010 may integrate an application processor and a modem processor. The application processor primarily processes operations involving an operating system, user interface, application program, or the like. The modem processor primarily processes radio communication, for example, being a baseband processor. It can be understood that the modem processor may alternatively be not integrated into the processor 1010.

The radio frequency unit 1001 is configured to obtain a first indicator, where the first indicator includes echo signal quality within a first sensing frame or predicted echo signal quality within a second sensing frame, the second sensing frame is a sensing frame following the first sensing frame, and a sensing frame includes a first slot for performing signal transmission and reception.

The processor 1010 is used by the first device to determine a duration of a first slot of the second sensing frame based on the first indicator.

Alternatively, in a case that the terminal is a second device, the communication interface is configured to: in a case that a first device adjusts a duration of a first slot based on a first indicator, receive first indication information from the first device, where the first indicator includes echo signal quality within a first sensing frame or predicted echo signal quality within a second sensing frame, the second sensing frame is a sensing frame following the first sensing frame, a sensing frame includes a first slot for performing signal transmission and reception, and the first indication information is used to indicate a duration of a first slot of the second sensing frame.

In a case that the first device is a sensing function network element, the second device includes at least one of a receiving device in a sensing node and a transmitting device in the sensing node; in a case that the first device is a receiving device in a sensing node, the second device includes a transmitting device in the sensing node; and in a case that the first device is a transmitting device in a sensing node, the second device includes a receiving device in the sensing node.

In this embodiment of this application, the duration of the first slot can be flexibly adjusted based on the first indicator of the sensing object according to changes in the sensing environment, thereby optimizing sensing time-resource occupation while sensing performance requirements are met.

An embodiment of this application further provides a network-side device including a processor and a communication interface. In a case that the network-side device is a first device, the communication interface is configured to obtain a first indicator, where the first indicator includes echo signal quality within a first sensing frame or predicted echo signal quality within a second sensing frame, the second sensing frame is a sensing frame following the first sensing frame, and a sensing frame includes a first slot for performing signal transmission and reception; and the processor is configured to determine a duration of a first slot of the second sensing frame based on the first indicator.

Alternatively, in a case that the network-side device is a second device, the communication interface is configured to: in a case that a first device adjusts a duration of a first slot based on a first indicator, receive first indication information from the first device, where the first indicator includes echo signal quality within a first sensing frame or predicted echo signal quality within a second sensing frame, the second sensing frame is a sensing frame following the first sensing frame, a sensing frame includes a first slot for performing signal transmission and reception, and the first indication information is used to indicate a duration of a first slot of the second sensing frame.

In a case that the first device is a sensing function network element, the second device includes at least one of a receiving device in a sensing node and a transmitting device in the sensing node; in a case that the first device is a receiving device in a sensing node, the second device includes at least one of a transmitting device in the sensing node and a sensing function network element; and in a case that the first device is a transmitting device in a sensing node, the second device includes at least one of a receiving device in the sensing node and a sensing function network element.

This network-side device embodiment corresponds to the foregoing sensing function network element method embodiment. All processes and implementations in the foregoing method embodiment can be applicable to this network-side device embodiment, with the same technical effect achieved.

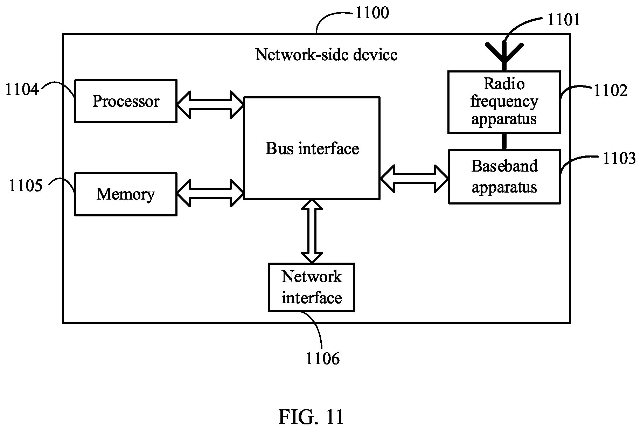

Specifically, an embodiment of this application further provides a network-side device. As shown in FIG. 11, the network-side device 1100 includes an antenna 1101, a radio frequency apparatus 1102, and a baseband apparatus 1103, a processor 1104, and a memory 1105. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes to-be-sent information, and sends the information to the radio frequency apparatus 1102; and the radio frequency apparatus 1102 processes the received information and then sends the information out by using the antenna 1101.

The method executed by the network-side device in the foregoing embodiments may be implemented on the baseband apparatus 1103. The baseband apparatus 1103 includes a baseband processor.

The baseband apparatus 1103 may include, for example, at least one baseband board, where a plurality of chips are disposed on the baseband board. As shown in FIG. 11, one of the chips is, for example, a baseband processor, and connected to the memory 1105 through a bus interface, to invoke the program in the memory 1105 to perform the operations of the network-side device shown in the foregoing method embodiment.

The network-side device may further include a network interface 1106. The interface is, for example, a common public radio interface (common public radio interface, CPRI).

Specifically, the network-side device 1100 in this embodiment of the present invention further includes: an instruction or a program stored in the memory 1105 and capable of running on the processor 1104. The processor 1104 invokes the instruction or program in the memory 1105 to execute the method executed by the modules shown in FIG.7 or FIG. 8, with the same technical effects achieved. To avoid repetition, details are not described herein again.

An embodiment of this application further provides a readable storage medium, where a program or an instruction is stored in the readable storage medium. When the program or instruction is executed by a processor, the processes of the foregoing sensing processing method embodiment can be implemented, with same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or an instruction to implement each process of the foregoing sensing processing method embodiment, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing sensing processing method embodiments, with the same technical effects achieved. To avoid repetition, details are not described herein again.

An embodiment of this application further provides a communication system, including a first device and a second device. The first device is configured to perform the processes of FIG. 2 and the foregoing method embodiments, and the second device is configured to perform the processes of FIG. 6 and the foregoing method embodiments, with the same technical effects achieved. To avoid repetition, details are not described herein again.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When implemented in a form of a software functional unit and sold or used as an independent product, the functions may be stored in a computer-readable storage medium. Based on such an understanding, the technical solutions of this disclosure essentially, or the part contributing to the prior art, or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this disclosure. The foregoing storage medium includes: any medium that can store program code, such as a USB flash drive, a removable hard disk, a ROM, a RAM, a magnetic disk, or an optical disc.

Persons of ordinary skill in the art may understand that all or some of the processes of the methods in the embodiments may be implemented by a computer program controlling relevant hardware. The program may be stored in a computer-readable storage medium. When the program runs, the processes of the method embodiments may be included. The storage medium may be a magnetic disk, an optical disc, a read-only memory (Read-Only Memory, ROM), or a random access memory (Random Access Memory, RAM).

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application.

**Claims**

1.  A sensing processing method, comprising:

    obtaining (201), by a first device, a first indicator, wherein the first indicator comprises echo signal quality within a first sensing frame or predicted echo signal quality within a second sensing frame, the second sensing frame is a sensing frame following the first sensing frame, and a sensing frame comprises a first slot for performing signal transmission and reception; and
    determining (202), by the first device, a duration of a first slot of the second sensing frame based on the first indicator.

2.  The method according to claim 1, wherein before the obtaining (201), by a first device, a first indicator, the method further comprises:

    obtaining, by the first device, target information, wherein the target information comprises at least one of first information and capability information of a sensing node, and the first information comprises at least one of a sensing target region, a sensing object type, sensing quality of service, QoS, sensing prior information, and location information of the sensing node; and
    determining, by the first device, an initial configuration based on the target information, wherein the initial configuration comprises at least one of the following: configuration information of a first slot, a duration of a second slot, and sensing frame arrangement, wherein the second slot is a slot in a sensing frame for performing an operation other than signal transmission and reception.

3.  The method according to claim 2, wherein the configuration information of a first slot comprises at least one of the following: an initial duration of the first slot, an upper limit of the duration of the first slot, and a lower limit of the duration of the first slot.

4.  The method according to claim 3, wherein the determining, by the first device, an initial configuration based on the target information comprises at least one of the following:

    determining, by the first device, the lower limit of the duration of the first slot based on a Doppler resolution requirement, wherein the Doppler resolution requirement is comprised in the sensing QoS;
    determining, by the first device, the upper limit of the duration of the first slot based on the sensing object type; and
    determining, by the first device, the initial duration of the first slot based on at least one of the sensing object type and the sensing prior information.

5.  The method according to claim 4, wherein the lower limit of the duration of the first slot is equal to a reciprocal of the Doppler resolution requirement.

6.  The method according to claim 4, wherein the upper limit $T_1$ of the duration of the first slot satisfies at least one of the following:

$$T_1 \leq \frac{\Delta R}{v_{max}},$$

wherein $\Delta R$ represents a distance change threshold of a sensing object within a first slot, and $v_{max}$ represents a maximum value of a typical speed range of the sensing object;

$$T_1 \leq \frac{\Delta \phi * R}{v_{max}},$$

wherein $\Delta \phi$ represents an angle change threshold of a sensing object within a first slot, R represents a distance of the sensing object, and $v_{max}$ represents a maximum value of a typical speed range of the sensing object; and

$$T_1 \leq \frac{\Delta v}{a_{max}},$$

wherein $\Delta v$ represents a speed change threshold of a sensing object within a first slot, and $a_{max}$ represents a maximum value of a typical acceleration range of the sensing object.

7.  The method according to claim 2, wherein the sensing frame arrangement comprises any one of the following:

a first arrangement, wherein the first arrangement is a serial arrangement between two adjacent sensing frames, such that a second slot of a third sensing frame does not overlap in time domain with a first slot of a fourth sensing frame, wherein the third sensing frame is a previous sensing frame of the fourth sensing frame; and a second arrangement, wherein the second arrangement is a parallel arrangement between two adjacent sensing frames, such that a second slot of a fifth sensing frame at least partially overlaps in time domain with a first slot of a sixth sensing frame, wherein the fifth sensing frame is a previous sensing frame of the sixth sensing frame.

8. The method according to claim 1, wherein the determining (202), by the first device, a duration of a first slot of the second sensing frame based on the first indicator comprises:
determining, by the first device, the duration of the first slot of the second sensing frame based on the first indicator, a first preset threshold, and a preset adjustment manner.

9. The method according to claim 8,
wherein the preset adjustment manner comprises any one of the following:

increasing or decreasing the duration of the first slot by a fixed change amount;
increasing or decreasing the duration of the first slot by a target ratio; and
adjusting the duration of the first slot according to a preset configuration table, wherein the preset configuration table comprises at least two first values, and the first values are parameter values of the first slot;
wherein the target ratio is a ratio of a target value to the first indicator, and the target value is determined based on the first preset threshold;
or,
wherein the first preset threshold comprises one threshold, and an adjustment rule of the duration of the first slot satisfies at least one of the following:

decreasing the duration of the first slot or keeping the duration of the first slot unchanged in a case that the first indicator is greater than the one threshold; and
increasing the duration of the first slot in a case that the first indicator is less than the one threshold;
or,
wherein the first preset threshold comprises a first threshold and a second threshold, the first threshold is less than the second threshold, and an adjustment rule of the duration of the first slot satisfies at least one of the following:

decreasing the duration of the first slot or keeping the duration of the first slot unchanged in a case that the first indicator is greater than the second threshold; and
increasing the duration of the first slot in a case that the first indicator is less than the first threshold;
or,
wherein the preset threshold comprises a third threshold and a fourth threshold, and an adjustment rule of the duration of the first slot satisfies at least one of the following:

decreasing the duration of the first slot in a case that the first indicator is greater than the third threshold and a deviation between the first indicator and the third threshold is greater than the fourth threshold; and
increasing the duration of the first slot in a case that the first indicator is less than the third threshold and the deviation between the third threshold and the first indicator is greater than the fourth threshold.

10. The method according to any one of claims 1 to 9, wherein in a case that the first device comprises a receiving device in the sensing node, the obtaining (201), by a first device, a first indicator comprises:

receiving, by the first device, a first signal based on a duration of a first slot of the first sensing frame to obtain echo data;
determining, by the first device, a target sensing result based on the echo data, wherein the target sensing result satisfies: the target sensing result comprises result information indicating whether a sensing object is detected, and in a case that the sensing object is detected, the target sensing result further comprises the first indicator; and
determining, by the first device, the first indicator based on the target sensing result;
or,
wherein in a case that the first device is a sensing function network element or a transmitting device in the sensing node, before the obtaining (201), by a first device, a first indicator, the method further comprises:

receiving, by the first device, second information from a receiving device in the sensing node, wherein the second information comprises any one of: echo data, an intermediate sensing result obtained by performing a first operation on the echo data, a target sensing result obtained by performing a second operation on the echo data, and the first indicator, wherein the echo data is data obtained by the receiving device in the sensing node performing a sensing task based on the duration of the first slot of the first sensing frame, the first operation is a partial operation of the second operation, the target sensing result satisfies: the target sensing result comprises result information indicating whether a sensing object is detected, and in a case that the sensing object is detected, the target sensing result further comprises the first indicator; and determining, by the first device, the first indicator based on the second information; or, wherein the method further comprises at least one of the following:

> in a case that the first device is a receiving device in the sensing node, transmitting, by the first device, first indication information to a first target device, wherein the first indication information is used to indicate an adjusted duration of the first slot, and the first target device comprises a transmitting device in the sensing node or comprises a transmitting device in the sensing node and a sensing function network element;
> in a case that the first device is a transmitting device in the sensing node, transmitting, by the first device, first indication information to a second target device, wherein the first indication information is used to indicate an adjusted duration of the first slot, and the second target device comprises a receiving device in the sensing node or comprises a receiving device in the sensing node and a sensing function network element; and
> in a case that the first device is a sensing function network element, transmitting, by the first device, first indication information to a transmitting device and receiving device in the sensing node, wherein the first indication information is used to indicate an adjusted duration of the first slot;
> or,

wherein after the determining (202), by the first device, a duration of a first slot of the second sensing frame based on the first indicator, the method further comprises at least one of the following:

> in a case that the first device comprises a transmitting device in the sensing node, transmitting, by the first device, a first signal based on the adjusted duration of the first slot; and
> in a case that the first device comprises a receiving device in the sensing node, receiving, by the first device, the first signal based on the adjusted duration of the first slot;
> or,
> wherein the echo signal quality comprises at least one of the following: echo signal power, signal to noise ratio of echo signal, signal to interference plus noise ratio of echo signal, reference signal received power, and reference signal received quality.

**11.** A sensing processing method, comprising:

> in a case that a first device adjusts a duration of a first slot based on a first indicator, receiving (601), by a second device, first indication information from the first device, wherein the first indicator comprises echo signal quality within a first sensing frame or predicted echo signal quality within a second sensing frame, the second sensing frame is a sensing frame following the first sensing frame, a sensing frame comprises a first slot for performing signal transmission and reception, and the first indication information is used to indicate a duration of a first slot of the second sensing frame; wherein
> in a case that the first device is a sensing function network element, the second device comprises at least one of a receiving device in a sensing node and a transmitting device in the sensing node; in a case that the first device is a receiving device in a sensing node, the second device comprises at least one of a transmitting device in the sensing node and a sensing function network element; and in a case that the first device is a transmitting device in a sensing node, the second device comprises at least one of a receiving device in the sensing node and a sensing function network element.

**12.** The method according to claim 11, wherein the method further comprises at least one of the following:

in a case that the second device comprises a transmitting device in a sensing node, transmitting, by the second device, a first signal based on an adjusted duration of the first slot; and

in a case that the second device comprises a receiving device in a sensing node, obtaining, by the second device, a first signal based on an adjusted duration of the first slot to obtain echo data; and transmitting second information to the first device or a sensing function network element, wherein the second information comprises echo data, an intermediate sensing result obtained by performing a first operation on the echo data, or a target sensing result obtained by performing a second operation on the echo data, wherein the echo data is data obtained by the receiving device in the sensing node performing a sensing task based on the duration of the first slot of the first sensing frame, the first operation is a partial operation of the second operation, the target sensing result satisfies: the target sensing result comprises result information indicating whether a sensing object is detected, and in a case that the sensing object is detected, the target sensing result further comprises the first indicator.

13. The method according to claim 11, wherein before the receiving (601), by a second device, first indication information from the first device, the method further comprises:

receiving, by the second device, second indication information from the first device, wherein the second indication information is used to indicate an initial configuration, and the initial configuration comprises at least one of the following: configuration information of a first slot, a duration of a second slot, and sensing frame arrangement, wherein the second slot is a slot in a sensing frame for performing an operation other than signal transmission and reception; wherein the configuration information of a first slot comprises at least one of the following: an initial duration of the first slot, an upper limit of the duration of the first slot, and a lower limit of the duration of the first slot.

14. The method according to claim 13,

wherein the lower limit of the duration of the first slot is equal to a reciprocal of a Doppler resolution requirement, and the Doppler resolution requirement is comprised in the sensing QoS; or,

wherein the upper limit $T_1$ of the duration of the first slot satisfies at least one of the following:

$$T_1 \le \frac{\Delta R}{v_{\max}},$$

wherein $\Delta R$ represents a distance change threshold of a sensing object within a first slot, and $v_{\max}$ represents a maximum value of a typical speed range of the sensing object;

$$T_1 \le \frac{\Delta \phi * R}{v_{\max}},$$

wherein $\Delta \phi$ represents an angle change threshold of a sensing object within a first slot, R represents a distance of the sensing object, and $v_{\max}$ represents a maximum value of a typical speed range of the sensing object; and

$$T_1 \le \frac{\Delta v}{a_{\max}},$$

wherein $\Delta v$ represents a speed change threshold of a sensing object within a first slot, and $a_{\max}$ represents a maximum value of a typical acceleration range of the sensing object; or,

wherein the sensing frame arrangement comprises any one of the following:

a first arrangement, wherein the first arrangement is a serial arrangement between two adjacent sensing frames, such that a second slot of a third sensing frame does not overlap in time domain with a first slot of a fourth sensing frame, wherein the third sensing frame is a previous sensing frame of the fourth sensing frame; and

a second arrangement, wherein the second arrangement is a parallel arrangement between two adjacent sensing frames, such that a second slot of a fifth sensing frame at least partially overlaps in time domain with a first slot of a sixth sensing frame, wherein the fifth sensing frame is a previous sensing frame of the sixth sensing frame.

15. A communication device (900), comprising a processor (901) and a memory (902), wherein the memory (902) stores a program or an instruction capable of running on the processor (901), and when the program or instruction is executed by the processor (901), the steps of the sensing processing method according to any one of claims 1 to 14 are implemented.

**Patentansprüche**

1. Erfassungsverarbeitungsverfahren, umfassend:

    Erlangen (201), durch eine erste Vorrichtung, eines ersten Indikators , wobei der erste Indikator eine Echosignalqualität innerhalb eines ersten Erfassungsrahmens oder eine vorhergesagte Echosignalqualität innerhalb eines zweiten Erfassungsrahmens umfasst, wobei der zweite Erfassungsrahmen ein Erfassungsrahmen ist, der auf den ersten Erfassungsrahmen folgt, und ein Erfassungsrahmen einen ersten Schlitz zum Durchführen von Signalübertragung und -empfang umfasst; und
    Bestimmen (202), durch die erste Vorrichtung, einer Dauer eines ersten Schlitzes des zweiten Erfassungsrahmens basierend auf dem ersten Indikator.

2. Verfahren nach Anspruch 1, wobei das Verfahren vor dem Erlangen (201) eines ersten Indikators durch eine erste Vorrichtung ferner Folgendes umfasst:

    Erlangen, durch die erste Vorrichtung, von Zielinformationen, wobei die Zielinformationen mindestens eines von ersten Informationen und Fähigkeitsinformationen eines Erfassungsknotens umfassen, und die ersten Informationen mindestens eines von einer Erfassungszielregion, einem Erfassungsobjekttyp, einer Erfassungsdienstqualität, QoS, Erfassungsvorinformationen und Standortinformationen des Erfassungsknotens umfassen; und
    Bestimmen, durch die erste Vorrichtung, einer Anfangskonfiguration basierend auf den Zielinformationen, wobei die Anfangskonfiguration mindestens eines der Folgenden umfasst: Konfigurationsinformationen eines ersten Schlitzes, eine Dauer eines zweiten Schlitzes und eine Erfassungsrahmenanordnung, wobei der zweite Schlitz ein Schlitz in einem Erfassungsrahmen zum Durchführen eines anderen Vorgangs als Signalübertragung und -empfang ist.

3. Verfahren nach Anspruch 2, wobei die Konfigurationsinformationen eines ersten Schlitzes mindestens eines der Folgenden umfasst: eine anfängliche Dauer des ersten Schlitzes, eine Obergrenze der Dauer des ersten Schlitzes und eine Untergrenze der Dauer des ersten Schlitzes.

4. Verfahren nach Anspruch 3, wobei das Bestimmen, durch die erste Vorrichtung, einer Anfangskonfiguration basierend auf den Zielinformationen mindestens eines der Folgenden umfasst:

    Bestimmen, durch die erste Vorrichtung, der Untergrenze der Dauer des ersten Schlitzes basierend auf einer Doppler-Auflösungsanforderung, wobei die Doppler-Auflösungsanforderung in der Erfassungs-QoS enthalten ist;
    Bestimmen, durch die erste Vorrichtung, der Obergrenze der Dauer des ersten Schlitzes, basierend auf dem Typ des Erfassungsobjekts; und
    Bestimmen, durch die erste Vorrichtung, der anfänglichen Dauer des ersten Schlitzes basierend auf dem Typ des Erfassungsobjekts und/oder den vorherigen Erfassungsinformationen.

5. Verfahren nach Anspruch 4, wobei die Untergrenze der Dauer des ersten Schlitzes gleich wie ein Kehrwert der Doppler-Auflösungsanforderung ist.

6. Verfahren nach Anspruch 4, wobei die Obergrenze $T_1$ der Dauer des ersten Schlitzes mindestens eines der Folgenden erfüllt:

$$T_1 \leq \frac{\Delta R}{v_{max}},$$

wobei $\Delta R$ einen Abstandsänderungsschwellenwert eines Erfassungsobjekts innerhalb eines ersten Schlitzes darstellt und $v_{max}$ einen Maximalwert eines typischen Geschwindigkeitsbereichs des Erfassungsobjekts darstellt;

$$T_1 \leq \frac{\Delta \phi^* R}{v_{max}},$$

wobei $\Delta \phi$ einen Winkeländerungsschwellenwert eines Erfassungsobjekts innerhalb eines ersten Schlitzes darstellt, $R$ einen Abstand des Erfassungsobjekts darstellt und $v_{max}$ einen Maximalwert eines typischen Geschwindigkeitsbereichs des Erfassungsobjekts darstellt; und

$$T_1 \leq \frac{\Delta v}{a_{max}}$$

wobei $\Delta v$ einen Geschwindigkeitsänderungsschwellenwert eines Erfassungsobjekts innerhalb eines ersten Schlitzes darstellt und $a_{max}$ einen Maximalwert eines typischen Beschleunigungsbereichs des Erfassungsobjekts darstellt.

7. Verfahren nach Anspruch 2, wobei die Erfassungsrahmenanordnung eines der Folgenden umfasst:

    eine erste Anordnung, wobei die erste Anordnung eine serielle Anordnung zwischen zwei angrenzenden Erfassungsrahmen ist, sodass sich ein zweiter Schlitz eines dritten Erfassungsrahmens im Zeitbereich nicht mit einem ersten Schlitz eines vierten Erfassungsrahmens überlappt, wobei der dritte Erfassungsrahmen ein vorheriger Erfassungsrahmen des vierten Erfassungsrahmens ist; und

eine zweite Anordnung, wobei die zweite Anordnung eine parallele Anordnung zwischen zwei angrenzenden Erfassungsrahmen ist, sodass sich ein zweiter Schlitz eines fünften Erfassungsrahmens im Zeitbereich zumindest teilweise mit einem ersten Schlitz eines sechsten Erfassungsrahmens überlappt, wobei der fünfte Erfassungsrahmen ein vorheriger Erfassungsrahmen des sechsten Erfassungsrahmens ist.

8. Verfahren nach Anspruch 1, wobei das Bestimmen (202), durch die erste Vorrichtung, einer Dauer eines ersten Schlitzes des zweiten Erfassungsrahmens basierend auf dem ersten Indikator Folgendes umfasst:

Bestimmen, durch die erste Vorrichtung, der Dauer des ersten Schlitzes des zweiten Erfassungsrahmens basierend auf dem ersten Indikator, einem ersten voreingestellten Schwellenwert und einer voreingestellten Anpassungsweise.

9. Verfahren nach Anspruch 8,
wobei die voreingestellte Anpassungsweise eines der Folgenden umfasst:

Erhöhen oder Verringern der Dauer des ersten Schlitzes um einen festen Änderungsbetrag;
Erhöhen oder Verringern der Dauer des ersten Schlitzes um ein Zielverhältnis; und
Anpassen der Dauer des ersten Schlitzes gemäß einer voreingestellten Konfigurationstabelle, wobei die voreingestellte Konfigurationstabelle mindestens zwei erste Werte umfasst und die ersten Werte Parameterwerte des ersten Schlitzes sind;
wobei das Zielverhältnis ein Verhältnis zwischen einem Zielwert und dem ersten Indikator ist und der Zielwert basierend auf dem ersten voreingestellten Schwellenwert bestimmt wird;
oder
wobei der erste voreingestellte Schwellenwert einen Schwellenwert umfasst und eine Anpassungsregel für die Dauer des ersten Schlitzes mindestens eines der Folgenden erfüllt:

Verringern der Dauer des ersten Schlitzes oder Beibehalten der Dauer des ersten Schlitzes in dem Fall, dass der erste Indikator größer als der eine Schwellenwert ist; und
Verlängern der Dauer des ersten Schlitzes, wenn der erste Indikator kleiner als der eine Schwellenwert ist;
oder
wobei der erste voreingestellte Schwellenwert einen ersten Schwellenwert und einen zweiten Schwellenwert umfasst, der erste Schwellenwert kleiner ist als der zweite Schwellenwert und eine Anpassungsregel der Dauer des ersten Schlitzes mindestens eines der Folgenden erfüllt:

Verringern der Dauer des ersten Schlitzes oder Beibehalten der Dauer des ersten Schlitzes in dem Fall, dass der erste Indikator größer ist als der zweite Schwellenwert; und
Verlängern der Dauer des ersten Schlitzes, wenn der erste Indikator kleiner ist als der eine Schwellenwert;
oder
wobei der voreingestellte Schwellenwert einen dritten Schwellenwert und einen vierten Schwellenwert umfasst, und eine Anpassungsregel der Dauer des ersten Schlitzes mindestens eines der Folgenden erfüllt:

Verringern der Dauer des ersten Schlitzes für den Fall, dass der erste Indikator größer ist als der dritte Schwellenwert und eine Abweichung zwischen dem ersten Indikator und dem dritten Schwellenwert größer ist als der vierte Schwellenwert; und
Erhöhen der Dauer des ersten Schlitzes, wenn der erste Indikator kleiner als der dritte Schwellenwert ist und die Abweichung zwischen dem dritten Schwellenwert und dem ersten Indikator größer ist als der vierte Schwellenwert.

10. Verfahren nach einem der Ansprüche 1 bis 9,
wobei in einem Fall, in dem die erste Vorrichtung eine Empfangsvorrichtung in dem Erfassungsknoten umfasst, das Erlangen (201), durch eine erste Vorrichtung, eines ersten Indikators Folgendes umfasst:

Empfangen, durch die erste Vorrichtung, eines ersten Signals, das auf einer Dauer eines ersten Schlitzes des ersten Erfassungsrahmens basiert, um Echodaten zu erlangen;
Bestimmen, durch die erste Vorrichtung, eines Zielerfassungsresultats basierend auf den Echodaten, wobei das Zielerfassungsresultat Folgendes erfüllt: das Zielerfassungsresultat umfasst Resultatinformationen, die angeben, ob ein Erfassungsobjekt erkannt wird, und in einem Fall, in dem das Erfassungsobjekt erkannt wird, umfasst das Zielerfassungsresultat ferner den ersten Indikator; und

Bestimmen, durch die erste Vorrichtung, des ersten Indikators basierend auf dem Zielerfassungsresultat;

oder

wobei das Verfahren in einem Fall, in dem die erste Vorrichtung ein Erfassungsfunktion-Netzelement oder eine Übertragungsvorrichtung in dem Erfassungsknoten ist, vor dem Erlangen (201), durch eine erste Vorrichtung, eines ersten Indikators ferner Folgendes umfasst:

Empfangen, durch die erste Vorrichtung, von zweiten Informationen von einer Empfangsvorrichtung in dem Erfassungsknoten, wobei die zweiten Informationen eines von Folgendem umfassen: Echodaten, ein Zwischenerfassungsresultat, das durch Durchführen einer ersten Operation an den Echodaten erlangt wird, ein Zielerfassungsresultat, das durch Durchführen einer zweiten Operation an den Echodaten erlangt wird, und den ersten Indikator, wobei die Echodaten Daten sind, die durch die Empfangsvorrichtung in dem Erfassungsknoten erlangt werden, die eine Erfassungsaufgabe basierend auf der Dauer des ersten Schlitzes des ersten Erfassungsrahmens durchführt, die erste Operation eine Teiloperation der zweiten Operation ist, das Zielerfassungsergebnis Folgendes erfüllt: das Zielerfassungsresultat umfasst Resultatinformationen, die angeben, ob ein Erfassungsobjekt erkannt wird, und in einem Fall, in dem das Erfassungsobjekt erkannt wird, umfasst das Zielerfassungsresultat ferner den ersten Indikator; und

Bestimmen, durch die erste Vorrichtung, des ersten Indikators basierend auf den zweiten Informationen;

oder

wobei das Verfahren ferner eines der Folgenden umfasst:

in einem Fall, in dem die erste Vorrichtung eine Empfangsvorrichtung in dem Erfassungsknoten ist, Übertragen, durch die erste Vorrichtung, von ersten Indikationsinformationen an eine erste Zielvorrichtung, wobei die ersten Indikationsinformationen verwendet werden, um eine angepasste Dauer des ersten Schlitzes anzugeben, und die erste Zielvorrichtung eine Übertragungsvorrichtung in dem Erfassungsknoten umfasst oder eine Übertragungsvorrichtung in dem Erfassungsknoten und ein Erfassungsfunktion-Netzelement umfasst;

in einem Fall, in dem die erste Vorrichtung eine Übertragungsvorrichtung in dem Erfassungsknoten ist, Übertragen, durch die erste Vorrichtung, von ersten Indikationsinformationen an eine zweite Zielvorrichtung, wobei die ersten Indikationsinformationen verwendet werden, um eine angepasste Dauer des ersten Schlitzes anzugeben, und die zweite Zielvorrichtung eine Empfangsvorrichtung in dem Erfassungsknoten umfasst oder eine Empfangsvorrichtung in dem Erfassungsknoten und ein Erfassungsfunktion-Netzelement umfasst; und

in einem Fall, in dem die erste Vorrichtung ein Erfassungsfunktion-Netzelement ist, Übertragen, durch die erste Vorrichtung, von ersten Indikationsinformationen an eine Übertragungsvorrichtung und eine Empfangsvorrichtung in dem Erfassungsknoten, wobei die ersten Indikationsinformationen verwendet werden, um eine angepasste Dauer des ersten Schlitzes anzugeben;

oder

wobei das Verfahren nach dem Bestimmen (202), durch die erste Vorrichtung, einer Dauer eines ersten Schlitzes des zweiten Erfassungsrahmens basierend auf dem ersten Indikator ferner mindestens eines der Folgenden umfasst:

für den Fall, dass die erste Vorrichtung eine Übertragungsvorrichtung in dem Erfassungsknoten umfasst, Übertragen eines ersten Signals durch die erste Vorrichtung basierend auf der angepassten Dauer des ersten Schlitzes; und

für den Fall, dass die erste Vorrichtung eine Empfangsvorrichtung in dem Erfassungsknoten umfasst, Empfangen, durch die erste Vorrichtung, des ersten Signals basierend auf der angepassten Dauer des ersten Schlitzes;

oder

wobei die Echosignalqualität mindestens eines der Folgenden umfasst: Echosignalleistung, Signal-Rausch-Verhältnis des Echosignals, Signal-Störung-plus-Rausch-Verhältnis des Echosignals, Empfangsleistung des Referenzsignals und Empfangsqualität des Referenzsignals.

**11.** Erfassungsverarbeitungsverfahren, umfassend:

in einem Fall, in dem eine erste Vorrichtung eine Dauer eines ersten Schlitzes basierend auf eines ersten Indikators anpasst, Empfangen (601), durch eine zweite Vorrichtung, von ersten Indikationsinformationen von der ersten Vorrichtung , wobei der erste Indikator eine Echosignalqualität innerhalb eines ersten Erfassungsrahmens oder eine vorhergesagte Echosignalqualität innerhalb eines zweiten Erfassungsrahmens umfasst, der zweite Erfassungsrahmen ein Erfassungsrahmen ist, der auf den ersten Erfassungsrahmen folgt, ein Erfassungsrahmen einen ersten Schlitz zum Durchführen von Signalübertragung und -empfang umfasst, und die ersten Indikationsinformationen verwendet werden, um eine Dauer eines ersten Schlitzes des zweiten Erfassungsrahmens anzugeben; wobei
in einem Fall, in dem die erste Vorrichtung ein Erfassungsfunktion-Netzelement ist, die zweite Vorrichtung mindestens eine Empfangsvorrichtung in einem Erfassungsknoten und eine Übertragungsvorrichtung in dem Erfassungsknoten umfasst; in einem Fall, in dem die erste Vorrichtung eine Empfangsvorrichtung in einem Erfassungsknoten ist, die zweite Vorrichtung mindestens eine Übertragungsvorrichtung in dem Erfassungsknoten und ein Erfassungsfunktion-Netzelement umfasst; und in einem Fall, in dem die erste Vorrichtung eine Übertragungsvorrichtung in einem Erfassungsknoten ist, die zweite Vorrichtung mindestens eine Empfangsvorrichtung in dem Erfassungsknoten und ein Erfassungsfunktion-Netzelement umfasst.

**12.** Verfahren nach Anspruch 11, wobei das Verfahren ferner mindestens eines der Folgenden umfasst:

in einem Fall, in dem die zweite Vorrichtung eine Übertragungsvorrichtung in einem Erfassungsknoten umfasst, Übertragen, durch die zweite Vorrichtung, eines ersten Signals basierend auf einer angepassten Dauer des ersten Schlitzes; und
in einem Fall, in dem die zweite Vorrichtung eine Empfangsvorrichtung in einem Erfassungsknoten umfasst, Erlangen, durch die zweite Vorrichtung, eines ersten Signals basierend auf einer angepassten Dauer des ersten Schlitzes, um Echodaten zu erlangen; und Übertragen von zweiten Informationen an die erste Vorrichtung oder ein Erfassungsfunktion-Netzelement, wobei die zweiten Informationen Echodaten, ein Zwischenerfassungsresultat, das durch Durchführen einer ersten Operation an den Echodaten erlangt wird, oder ein Zwischenerfassungsresultat, das durch Durchführen einer zweiten Operation an den Echodaten erlangt wird, umfasst, wobei die Echodaten Daten sind, die durch die Empfangsvorrichtung in dem Erfassungsknoten erlangt werden, die eine Erfassungsaufgabe basierend auf der Dauer des ersten Schlitzes des ersten Erfassungsrahmens durchführt, die erste Operation eine Teiloperation der zweiten Operation ist, das Zielerfassungsergebnis Folgendes erfüllt: das Zielerfassungsresultat umfasst Resultatinformationen, die angeben, ob ein Erfassungsobjekt erkannt wird, und in einem Fall, in dem das Erfassungsobjekt erkannt wird, umfasst das Zielerfassungsresultat ferner den ersten Indikator.

**13.** Verfahren nach Anspruch 11, wobei das Verfahren vor dem Empfangen (601), durch eine zweite Vorrichtung, von ersten Indikationsinformationen von der ersten Vorrichtung ferner Folgendes umfasst:

Empfangen, durch die zweite Vorrichtung, von zweiten Indikationsinformationen von der ersten Vorrichtung, wobei die zweiten Indikationsinformationen verwendet werden, um eine Anfangskonfiguration anzugeben, und die Anfangskonfiguration mindestens eines der Folgenden umfasst: Konfigurationsinformationen eines ersten Schlitzes, eine Dauer eines zweiten Schlitzes und eine Erfassungsrahmenanordnung, wobei der zweite Schlitz ein Schlitz in einem Erfassungsrahmen zum Durchführen einer anderen Operation als Signalübertragung und -empfang ist;
wobei die Konfigurationsinformationen eines ersten Schlitzes mindestens eines der Folgenden umfasst: eine anfängliche Dauer des ersten Schlitzes, eine Obergrenze der Dauer des ersten Schlitzes und eine Untergrenze der Dauer des ersten Schlitzes.

**14.** Verfahren nach Anspruch 13,

wobei die Untergrenze der Dauer des ersten Schlitzes gleich wie ein Kehrwert einer Doppler-Auflösungsanforderung ist und die Doppler-Auflösungsanforderung in der Erfassungs-QoS enthalten ist;
oder
wobei die Obergrenze $T_1$ der Dauer des ersten Schlitzes mindestens eines der Folgenden erfüllt:

$$T_1 \leq \frac{\Delta R}{v_{max}},$$

wobei $\Delta R$ einen Abstandsänderungsschwellenwert eines Erfassungsobjekts innerhalb eines ersten Schlitzes darstellt und $v_{max}$ einen Maximalwert eines typischen Geschwindigkeitsbereichs des Erfassungsobjekts darstellt;

$$T_1 \leq \frac{\Delta \phi^* R}{v_{max}},$$

wobei $\Delta\phi$ einen Winkeländerungsschwellenwert eines Erfassungsobjekts innerhalb eines ersten Schlitzes darstellt, $R$ einen Abstand des Erfassungsobjekts darstellt und $v_{max}$ einen Maximalwert eines typischen Geschwindigkeitsbereichs des Erfassungsobjekts darstellt; und

$$T_1 \leq \frac{\Delta v}{a_{max}}$$

wobei $\Delta v$ einen Geschwindigkeitsänderungsschwellenwert eines Erfassungsobjekts innerhalb eines ersten Schlitzes darstellt und $a_{max}$ einen Maximalwert eines typischen Beschleunigungsbereichs des Erfassungsobjekts darstellt; oder

wobei die Erfassungsrahmenanordnung einer der Folgenden umfasst:

eine erste Anordnung, wobei die erste Anordnung eine serielle Anordnung zwischen zwei angrenzenden Erfassungsrahmen ist, sodass sich ein zweiter Schlitz eines dritten Erfassungsrahmens im Zeitbereich nicht mit einem ersten Schlitz eines vierten Erfassungsrahmens überlappt, wobei der dritte Erfassungsrahmen ein vorheriger Erfassungsrahmen des vierten Erfassungsrahmens ist; und
eine zweite Anordnung, wobei die zweite Anordnung eine parallele Anordnung zwischen zwei angrenzenden Erfassungsrahmen ist, sodass sich ein zweiter Schlitz eines fünften Erfassungsrahmens im Zeitbereich zumindest teilweise mit einem ersten Schlitz eines sechsten Erfassungsrahmens überlappt, wobei der fünfte Erfassungsrahmen ein vorheriger Erfassungsrahmen des sechsten Erfassungsrahmens ist.

15. Kommunikationsvorrichtung (900), umfassend einen Prozessor (901) und einen Speicher (902), wobei der Speicher (902) ein Programm oder eine Anweisung speichert, das/die in der Lage ist, um auf dem Prozessor (901) zu laufen, und wenn das Programm oder die Anweisung von dem Prozessor (901) ausgeführt wird, die Schritte des Erfassungsverarbeitungsverfahrens nach einem der Ansprüche 1 bis 14 implementiert werden.

**Revendications**

1. Procédé de traitement de détection comprenant :

l'obtention (201), par un premier dispositif, d'un premier indicateur, dans lequel le premier indicateur comprend la qualité du signal d'écho dans une première trame de détection ou la qualité prédite du signal d'écho dans une deuxième trame de détection, la deuxième trame de détection est une trame de détection suivant la première trame de détection, et une trame de détection comprend un premier créneau pour effectuer la transmission et la réception de signal ; et
la détermination (202), par le premier dispositif, de la durée d'un premier créneau de la deuxième trame de détection sur la base du premier indicateur.

2. Procédé selon la revendication 1, dans lequel avant l'obtention (201), par un premier dispositif, d'un premier indicateur, le procédé comprend en outre :

l'obtention, par le premier dispositif, d'informations cibles, dans lequel les informations cibles comprennent au moins l'une de premières informations et d'informations sur la capacité d'un nœud de détection, et les premières informations comprennent au moins un élément d'une région cible de détection, d'un type d'objet de détection, d'une qualité de service de détection (QoS), d'informations préalables de détection et d'informations de localisation du nœud de détection ; et
la détermination, par le premier dispositif, d'une configuration initiale sur la base des informations cibles, dans lequel la configuration initiale comprend au moins l'un des éléments suivants : des informations de configuration d'un premier créneau, une durée d'un second créneau et un agencement de la trame de détection, dans lequel le second créneau est un créneau dans une trame de détection pour l'exécution d'une opération autre que la transmission et la réception de signal.

3. Procédé selon la revendication 2, dans lequel les informations de configuration d'un premier créneau comprennent au moins l'un des éléments suivants : une durée initiale du premier créneau, une limite supérieure de la durée du premier créneau et une limite inférieure de la durée du premier créneau.

4. Procédé selon la revendication 3, dans lequel la détermination, par le premier dispositif, d'une configuration initiale sur la base des informations cibles comprend au moins l'un des éléments suivants :

la détermination, par le premier dispositif, de la limite inférieure de la durée du premier créneau sur la base d'une exigence de résolution Doppler, dans lequel l'exigence de résolution Doppler est comprise dans la QoS de détection ; la détermination, par le premier dispositif, de la limite supérieure de la durée du premier créneau sur la base du type d'objet de détection ; et la détermination, par le premier dispositif, de la durée initiale du premier créneau sur la base d'au moins un du type d'objet de détection et des informations préalables de détection.

5. Procédé selon la revendication 4, dans lequel la limite inférieure de la durée du premier créneau est égale à une réciproque de l'exigence de résolution Doppler.

6. Procédé selon la revendication 4, dans lequel la limite supérieure $T_1$ de la durée du premier créneau satisfait à au moins l'une des conditions suivantes :

$$T_1 \leq \frac{\Delta R}{v_{max}},$$

dans lequel $\Delta R$ représente un seuil de changement de distance d'un objet de détection dans un premier créneau, et $v_{max}$ représente une valeur maximale d'une plage de vitesse classique de l'objet de détection ;

$$T_1 \leq \frac{\Delta \phi^* R}{v_{max}},$$

dans lequel $\Delta \phi$ représente un seuil de changement d'angle d'un objet de détection dans un premier créneau, $R$ représente une distance de l'objet de détection, et $v_{max}$ représente une valeur maximale d'une plage de vitesse classique de l'objet de détection ; et

$$T_1 \leq \frac{\Delta v}{a_{max}}$$

dans lequel $\Delta v$ représente un seuil de changement de vitesse d'un objet de détection dans un premier

créneau, et $a_{max}$ représente une valeur maximale d'une plage d'accélération classique de l'objet de détection.

7. Procédé selon la revendication 2, dans lequel l'agencement de la trame de détection comprend l'un quelconque des éléments suivants :

un premier agencement, dans lequel le premier agencement est un agencement en série entre deux trames de détection adjacentes, de sorte qu'un second créneau d'une troisième trame de détection ne chevauche pas dans le domaine temporel un premier créneau d'une quatrième trame de détection, dans lequel la troisième trame de détection est une trame de détection antérieure à la quatrième trame de détection ; et un second agencement, dans lequel le second agencement est un agencement en parallèle entre deux trames de détection adjacentes, de sorte qu'un second créneau d'une cinquième trame de détection chevauche au moins partiellement dans le domaine temporel un premier créneau d'une sixième trame de détection, dans lequel la cinquième trame de détection est une trame de détection antérieure à la sixième trame de détection.

8. Procédé selon la revendication 1, dans lequel la détermination (202), par le premier dispositif, d'une durée d'un premier créneau de la deuxième trame de détection sur la base du premier indicateur comprend : la détermination, par le premier dispositif, de la durée du premier créneau de la deuxième trame de détection sur la base du premier indicateur, d'un premier seuil prédéfini et d'un mode d'ajustement prédéfini.

9. Procédé selon la revendication 8,

dans lequel le mode d'ajustement prédéfini comprend l'un quelconque des éléments suivants : augmentation ou diminution de la durée du premier créneau d'une quantité de changement fixe ; augmentation ou diminution de la durée du premier créneau d'un rapport cible ; et ajustement de la durée du premier créneau en fonction d'une table de configuration prédéfinie, dans lequel la table de configuration prédéfinie comprend au moins deux premières valeurs, et les premières valeurs sont des valeurs de paramètre du premier créneau ; dans lequel le rapport cible est un rapport entre une valeur cible et le premier indicateur, et la valeur cible est déterminée sur la base du premier seuil prédéfini ; ou,

dans lequel le premier seuil prédéfini comprend un seuil, et une règle d'ajustement de la durée du premier créneau satisfait à au moins l'une des conditions suivantes :

diminution de la durée du premier créneau ou maintien de la durée du premier créneau si le premier indicateur est supérieur à un seuil ; et
augmentation de la durée du premier créneau si le premier indicateur est inférieur à un seuil ;
ou,
dans lequel le premier seuil prédéfini comprend un premier seuil et un deuxième seuil, le premier seuil est inférieur au deuxième seuil, et une règle d'ajustement de la durée du premier créneau satisfait à au moins l'une des conditions suivantes :

diminution de la durée du premier créneau ou maintien de la durée du premier créneau si le premier indicateur est supérieur au deuxième seuil ; et
augmentation de la durée du premier créneau si le premier indicateur est inférieur au premier seuil ;
ou,
dans lequel le seuil prédéfini comprend un troisième seuil et un quatrième seuil, et une règle d'ajustement de la durée du premier créneau satisfait à au moins l'une des conditions suivantes :

diminution de la durée du premier créneau si le premier indicateur est supérieur au troisième seuil et si un écart entre le premier indicateur et le troisième seuil est supérieur au quatrième seuil ; et
augmentation de la durée du premier créneau si le premier indicateur est inférieur au troisième seuil et si l'écart entre le troisième seuil et le premier indicateur est supérieur au quatrième seuil.

10. Procédé selon l'une quelconque des revendications 1 à 9,
dans lequel, dans un cas où le premier dispositif comprend un dispositif de réception dans le nœud de détection, l'obtention (201), par un premier dispositif, d'un premier indicateur comprend :

la réception, par le premier dispositif, d'un premier signal fondé sur une durée d'un premier créneau de la première trame de détection afin d'obtenir des données d'écho ;

la détermination, par le premier dispositif, d'un résultat de détection cible sur la base des données d'écho, dans lequel le résultat de détection cible répond aux conditions suivantes : le résultat de détection cible comprend des informations de résultat indiquant si un objet de détection est détecté, et dans un cas où l'objet de détection est détecté, le résultat de détection cible comprend en outre le premier indicateur ; et
la détermination, par le premier dispositif, du premier indicateur sur la base du résultat de la détection cible ;
ou,
dans lequel, dans un cas où le premier dispositif est un élément de réseau à fonction de détection ou un dispositif de transmission dans le nœud de détection, avant l'obtention (201), par un premier dispositif, d'un premier indicateur, le procédé comprend en outre :

la réception, par le premier dispositif, de secondes informations provenant d'un dispositif de réception dans le nœud de détection, dans lequel les secondes informations comprennent l'un quelconque des éléments suivants : des données d'écho, un résultat de détection intermédiaire obtenu en effectuant une première opération sur les données d'écho, un résultat de détection cible obtenu en effectuant une seconde opération sur les données d'écho, et le premier indicateur, dans lequel les données d'écho sont des données obtenues par le dispositif de réception dans le nœud de détection effectuant une tâche de détection sur la base de la durée du premier créneau de la première trame de détection, la première opération est une opération partielle de la seconde opération, le résultat de détection cible satisfait aux conditions suivantes : le résultat de détection cible comprend des informations de résultat indiquant si un objet de détection est détecté, et dans un cas où l'objet de détection est détecté, le résultat de détection cible comprend en outre le premier indicateur ; et
la détermination, par le premier dispositif, du premier indicateur sur la base des secondes informations ;
ou,
dans lequel le procédé comprend en outre l'un des éléments suivants :

dans un cas où le premier dispositif est un dispositif de réception dans le nœud de détection, la transmission, par le premier dispositif, de premières informations d'indication à un premier dispositif cible, dans lequel les premières informations d'indication sont utilisées pour indiquer une durée ajustée du premier créneau, et le premier dispositif cible comprend un dispositif de transmission dans le nœud de détection ou comprend un dispositif de transmission dans le nœud de détection et un élément de réseau à fonction de détection ; dans un cas où le premier dispositif est un dispositif de transmission dans le nœud de détection, la transmission, par le premier dispositif, de premières informations d'indication à un second dispositif cible, dans lequel les premières informations d'indication sont utilisées pour indiquer une durée ajustée du premier créneau, et le second dispositif cible comprend un dispositif de réception dans le nœud de détection ou comprend un dispositif de réception dans le nœud de détection et un élément de réseau à fonction de détection ; et dans un cas où le premier dispositif est un élément de réseau à fonction de détection, la transmission, par le premier dispositif, de premières informations d'indication à un dispositif de transmission et à un dispositif de réception dans le nœud de détection, dans lequel les premières informations d'indication sont utilisées pour indiquer une durée ajustée du premier créneau ; ou,

dans lequel, après la détermination (202), par le premier dispositif, d'une durée d'un premier créneau de la deuxième trame de détection sur la base du premier indicateur, le procédé comprend en outre au moins l'un des éléments suivants :

dans un cas où le premier dispositif comprend un dispositif de transmission dans le nœud de détection, la transmission, par le premier dispositif, d'un premier signal sur la base de la durée ajustée du premier créneau ; et dans un cas où le premier dispositif comprend un dispositif de réception dans le nœud de détection, la réception, par le premier dispositif, du premier signal sur la base de la durée ajustée du premier créneau ; ou,

dans lequel la qualité du signal d'écho comprend au moins l'un des éléments suivants : la puissance du signal d'écho, le rapport signal/bruit du signal d'écho, le rapport signal/interférence plus bruit du signal d'écho, la puissance de réception du signal de référence et la qualité de réception du signal de référence.

11. Procédé de traitement de détection, comprenant :

dans un cas où un premier dispositif ajuste une durée d'un premier créneau sur la base d'un premier indicateur, la réception (601), par un second dispositif, de premières informations d'indication provenant du premier dispositif, dans lequel le premier indicateur comprend la qualité du signal d'écho dans une première trame de détection ou la qualité prédite du signal d'écho dans une deuxième trame de détection, la deuxième trame de détection est une trame de détection suivant la première trame de détection, une trame de détection comprend un premier créneau pour effectuer la transmission et la réception de signal, et les premières informations d'indication sont utilisées pour indiquer la durée d'un premier créneau de la deuxième trame de détection ; dans lequel

dans un cas où le premier dispositif est un élément de réseau à fonction de détection, le second dispositif comprend au moins l'un d'un dispositif de réception dans un nœud de détection et d'un dispositif de transmission dans le nœud de détection ; dans un cas où le premier dispositif est un dispositif de réception dans un nœud de détection, le second dispositif comprend au moins l'un d'un dispositif de transmission dans le nœud de détection et d'un élément de réseau à fonction de détection ; et dans un cas où le premier dispositif est un dispositif de transmission dans un nœud de détection, le second dispositif comprend au moins l'un d'un dispositif de réception dans le nœud de détection et d'un élément de réseau à fonction de détection.

12. Procédé selon la revendication 11, dans lequel le procédé comprend en outre au moins l'un des éléments suivants :

dans un cas où le second dispositif comprend un dispositif de transmission dans un nœud de détection, la transmission, par le second dispositif, d'un premier signal sur la base d'une durée ajustée du premier créneau ; et dans le cas où le second dispositif comprend un dispositif de réception dans un nœud de détection, l'obtention, par le second dispositif, d'un premier signal sur la base d'une durée ajustée du premier créneau pour obtenir des données d'écho ; et la transmission de secondes informations au premier dispositif ou à un élément de réseau à fonction de détection, dans lequel les secondes informations comprennent des données d'écho, un résultat de détection intermédiaire obtenu en effectuant une première opération sur les données d'écho, ou un résultat de détection cible obtenu en effectuant une seconde opération sur les données d'écho, dans lequel les données d'écho sont des données obtenues par le dispositif de réception dans le nœud de détection effectuant une tâche de détection sur la base de la durée du premier créneau de la première trame de détection, la première opération est une opération partielle de la seconde opération, le résultat de détection cible satisfaisait ce qui suit : le résultat de détection cible comprend des informations de résultat indiquant si un objet de détection est détecté, et dans un cas où l'objet de détection est détecté, le résultat de détection cible comprend en outre le premier indicateur.

**13.** Procédé selon la revendication 11, dans lequel avant la réception (601), par un second dispositif, de premières informations d'indication provenant du premier dispositif, le procédé comprend en outre :

la réception, par le second dispositif, de secondes informations d'indication provenant du premier dispositif, dans lequel les secondes informations d'indication sont utilisées pour indiquer une configuration initiale, et la configuration initiale comprend au moins l'un des éléments suivants : des informations de configuration d'un premier créneau, une durée d'un second créneau et un agencement de la trame de détection, dans lequel le second créneau est un créneau dans une trame de détection pour l'exécution d'une opération autre que la transmission et la réception de signal ; dans lequel les informations de configuration d'un premier créneau comprennent au moins l'un des éléments suivants : une durée initiale du premier créneau, une limite supérieure de la durée du premier créneau et une limite inférieure de la durée du premier créneau.

**14.** Procédé selon la revendication 13,

dans lequel la limite inférieure de la durée du premier créneau est égale à une réciproque d'une exigence de résolution Doppler, et l'exigence de résolution Doppler est comprise dans la QoS de détection ;
ou,
dans lequel la limite supérieure $T_1$ de la durée du premier créneau satisfait à au moins l'une des conditions suivantes :

$$T_1 \leq \frac{\Delta R}{v_{max}},$$

dans lequel $\Delta R$ représente un seuil de changement de distance d'un objet de détection dans un premier créneau, et $v_{max}$ représente une valeur maximale d'une plage de vitesse classique de l'objet de détection ;

$$T_1 \leq \frac{\Delta \phi^* R}{v_{max}},$$

dans lequel $\Delta \phi$ représente un seuil de changement d'angle d'un objet de détection dans un premier créneau, $R$ représente une distance de l'objet de détection, et $v_{max}$ représente une valeur maximale d'une plage de vitesse classique de l'objet de détection ; et

$$T_1 \leq \frac{\Delta v}{a_{max}},$$

dans lequel $\Delta v$ représente un seuil de changement de vitesse d'un objet de détection dans un premier créneau, et $a_{max}$ représente une valeur maximale d'une plage d'accélération classique de l'objet de détection ;
ou,
dans lequel l'agencement de la trame de détection comprend l'un quelconque des éléments suivants :

un premier agencement, dans lequel le premier agencement est un agencement en série entre deux trames de détection adjacentes, de sorte qu'un second créneau d'une troisième trame de détection ne chevauche pas dans le domaine temporel un premier créneau d'une quatrième trame de détection, dans lequel la troisième trame de détection est une trame de détection antérieure à la quatrième trame de détection ; et un second agencement, dans lequel le second agencement est un agencement en parallèle entre deux trames de détection adjacentes, de sorte qu'un second créneau d'une cinquième trame de détection chevauche au moins partiellement dans le domaine temporel un premier créneau d'une sixième trame de détection, dans lequel la cinquième trame de détection est une trame de détection antérieure à la sixième trame de détection.

15. Dispositif de communication (900), comprenant un processeur (901) et une mémoire (902), dans lequel la mémoire (902) stocke un programme ou une instruction capable de s'exécuter sur le processeur (901), et lorsque le programme ou l'instruction est exécuté par le processeur (901), les étapes du procédé de traitement de détection selon l'une quelconque des revendications 1 à 14 sont mises en œuvre.

FIG. 1

FIG. 2

Sensing frame

| First slot | Second slot | ... |

| Sensing signal period 1 | Sensing signal period 2 | ··· | Sensing signal period N |

FIG. 3

Sensing frame 1 | Sensing frame 2

| First slot | Second slot | First slot | Second slot |

FIG. 4

Sensing frame 1

| First slot | Second slot |

| First slot | Second slot |

Offset

FIG. 5

In a case that a first device adjusts a duration of a first slot based on a first indicator, a second device receives first indication information from the first device, where the first indication information is used to indicate an adjusted duration of the first slot ⌐ 601

FIG. 6

⌐ 700

Sensing processing apparatus

Obtaining module ⌐ 701

Adjustment module ⌐ 702

FIG. 7

⌐ 800

Sensing processing apparatus

First receiving module ⌐ 801

FIG. 8

900

Communication device

901 — Processor ⇄ Memory — 902

FIG. 9

1000

1001 — Radio frequency unit

Network module — 1002

1010 —

Memory
1009 — Application program
Operating system

Audio output unit — 1003

1004

Input unit
Graphics processing unit — 10041
Microphone — 10042

1008 — Interface unit

1007 —

User input unit
10071 — Touch panel
10072 — Other input devices

Processor

1006

Display unit
Display panel — 10061

Sensor — 1005

FIG. 10

FIG. 11

**EP 4 496 409 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210273470X

- US 2021286045 A